# EUROPÄISCHE PATENTSCHRIFT

(11) **EP 3 795 056 B1**
(45) Veröffentlichungstag und Bekanntmachung des Hinweises auf die Patenterteilung: **08.01.2025**
(21) Anmeldenummer: 20197594.3
(22) Anmeldetag: 22.09.2020
(51) Int. Cl.: A47L 11/40

(54) **VERFAHREN ZUM REINIGEN EINER BODENFLÄCHE MIT EINER BODENREINIGUNGSMASCHINE**
METHOD FOR CLEANING A FLOOR SURFACE WITH A FLOOR CLEANING MACHINE
PROCÉDÉ DE NETTOYAGE D'UNE SURFACE DE SOL AU MOYEN D'UNE MACHINE DE NETTOYAGE DU SOL

(30) Priorität: 23.09.2019 DE 102019125469
(43) Veröffentlichungstag der Anmeldung: 24.03.2021
(73) Patentinhaber: Hako GmbH, 23843 Bad Oldesloe (DE)
(72) Erfinder: Stelljes, Joscha, 23909 Ratzeburg (DE); Klüssendorff, Jan Helge, 23556 Lübeck (DE)
(74) Vertreter: Bird & Bird LLP - Hamburg

(56) Entgegenhaltungen:
- WO-A1-2020/151918
- AU-A- 6 607 700
- CN-A- 108 209 751
- CN-A- 109 984 689
- CN-A- 111 387 892
- CN-A- 111 643 017
- CN-A- 111 657 798
- CN-A- 111 759 241
- DE-A1- 19 615 712
- DE-A1- 4 323 332
- FR-A1- 2 695 342
- US-A- 5 341 540
- US-A- 5 353 224
- US-A- 5 568 589
- US-A- 5 634 237
- US-A- 5 867 800
- US-A1- 2017 329 333
- US-A1- 2017 329 347
- US-A1- 2019 090 712
- US-A1- 2019 346 853
- US-A1- 2019 370 691
- US-A1- 2020 016 524
- US-A1- 2020 019 181
- US-A1- 2020 064 858
- US-A1- 2020 097 012
- US-A1- 2020 159 246
- US-A1- 2020 218 274
- US-A1- 2021 026 367
- US-B1- 10 368 711
- US-B1- 6 459 955

## Beschreibung

Die vorliegende Erfindung betrifft ein Verfahren zum Reinigen einer Bodenfläche mit einer Bodenreinigungsmaschine.

Verfahren zum Reinigen von Bodenflächen mittels Bodenreinigungsmaschinen sind bekannt. Bei diesen Verfahren wird gewöhnlich eine Bodenreinigungsmaschine mit einem Fahrwerk über die zu reinigende Bodenfläche bewegt und eine an dem Fahrwerk befestigte Reinigungsvorrichtung in eine Arbeitsposition verbracht, in der die Reinigungsvorrichtung mit der zu reinigenden Bodenfläche eingreift, sodass bei einer Bewegung der Bodenreinigungsmaschine über die zu reinigende Bodenfläche diese gereinigt wird.

Insbesondere dann, wenn die Bodenreinigungsmaschine autonom arbeitet, ist es wünschenswert, vor einer Reinigung einer Bodenfläche einen zu reinigenden Bereich der Bodenfläche zu bestimmen und anschließend eine sichere Reinigung der Bodenfläche zu gewährleisten. Dabei ist es wünschenswert, dass dies besonders benutzerfreundlich und effizient möglich ist. Das US-Patent mit der Patentnummer 5,568,589 beschreibt beispielsweise eine selbstangetrieben Reinigungsmaschine, die sich entlang einer Wand bewegt und so einen Bearbeitungsbereich definiert.

Es ist Aufgabe der vorliegenden Erfindung, auf benutzerfreundliche und effiziente Weise einen zu reinigenden Bereich einer Bodenfläche zu bestimmen und eine sichere Reinigung der Bodenfläche zu gewährleisten. Unter Berücksichtigung des US-Patents mit der Patentnummer 5,568,589 ist die Aufgabe, eine effiziente Bewegung der Bodenreinigungsmaschine zu gewährleisten.

Gemäß der Erfindung wird die genannte Aufgabe durch ein Verfahren mit den Merkmalen des Patentanspruchs 1 gelöst.

Das Verfahren ist zum Reinigen einer Bodenfläche mit einer Bodenreinigungsmaschine mit einem Fahrwerk zum Bewegen der Bodenreinigungsmaschine über die zu reinigende Bodenfläche und mit einer an dem Fahrwerk befestigten Reinigungsvorrichtung, die in eine Arbeitsposition verbracht werden kann, in der die Reinigungsvorrichtung mit der zu reinigenden Bodenfläche eingreift, vorgesehen. Das Verfahren umfasst ein Bewegen der Bodenreinigungsmaschine über die zu reinigende Bodenfläche entlang eines geschlossenen ersten Lernpfades. Das Verfahren umfasst außerdem ein Bestimmen eines zumindest einen Abschnitt der zu reinigenden Bodenfläche aufweisenden ersten Arbeitsareals mit einer vorgegebenen geometrischen Figur, wobei die Erstreckung des ersten Arbeitsareals durch den geschlossenen ersten Lernpfad bestimmt ist. Ferner umfasst das Verfahren ein Bestimmen eines ersten Arbeitspfads innerhalb des ersten Arbeitsareals. Des Weiteren umfasst das Verfahren ein Bewegen der Bodenreinigungsmaschine entlang des ersten Arbeitspfads, wobei die Reinigungsvorrichtung zumindest in Abschnitten des ersten Arbeitspfades in der Arbeitsposition ist. Außerdem umfasst das Verfahren ein Erfassen der Umgebung der Bodenreinigungsmaschine während des Bewegens der Bodenreinigungsmaschine entlang des ersten Arbeitspfads so, dass, wenn ein Hindernis auf dem ersten Arbeitspfad angeordnet ist, das Hindernis von der Bodenreinigungsmaschine erfasst wird. Das Verfahren umfasst schließlich dann, wenn ein Hindernis auf dem ersten Arbeitspfad angeordnet ist, ein Ändern des ersten Arbeitspfads zumindest abschnittsweise so, dass die Bodenreinigungsmaschine nicht mit dem Hindernis kollidiert.

Das Verfahren ist zum Reinigen der Bodenfläche mit der Bodenreinigungsmaschine mit dem Fahrwerk zum Bewegen der Bodenreinigungsmaschine über die zu reinigende Bodenfläche und mit der an dem Fahrwerk befestigten Reinigungsvorrichtung, die in eine Arbeitsposition verbracht werden kann, in der die Reinigungsvorrichtung mit der zu reinigenden Bodenfläche eingreift, vorgesehen. Bevorzugt kann die Reinigungsvorrichtung in die Arbeitsposition und aus der Arbeitsposition verbracht werden. Insbesondere kann die Reinigungsvorrichtung aus einer Transportposition in die Arbeitsposition und aus der Arbeitsposition in die Transportposition verbracht werden. Bevorzugt greift die Reinigungsvorrichtung in der Transportposition nicht mit der zu reinigenden Bodenfläche ein, sodass eine effiziente Bewegung der Bodenreinigungsmaschine zu der, über die und von der zu reinigenden Bodenfläche gewährleistet werden kann.

Das Verfahren umfasst das Bewegen der Bodenreinigungsmaschine über die zu reinigende Bodenfläche entlang des geschlossenen ersten Lernpfades. Die Bodenreinigungsmaschine kann beispielsweise von einem Bediener der Bodenreinigungsmaschine entlang des ersten Lernpfades bewegt werden, sodass eine individuelle Form und Anordnung des ersten Lernpfades ermöglicht wird. Dass der erste Lernpfad geschlossen ist, kann dadurch erreicht werden, dass ein Anfang des ersten Lernpfades und ein Ende des ersten Lernpfades aneinander angrenzen. Im Zusammenhang mit der vorliegenden Erfindung ist unter einem geschlossenen Lernpfad auch ein Lernpfad zu verstehen, dessen Anfang und Ende nicht aneinander angrenzen, sondern einen Abstand zueinander aufweisen, der geringer als ein Maximalabstand ist. Der Maximalabstand kann beispielsweise 1 m sein.

Das Verfahren umfasst ferner das Bestimmen des zumindest den Abschnitt der zu reinigenden Bodenfläche aufweisenden ersten Arbeitsareals mit der vorgegebenen geometrischen Figur, wobei die Erstreckung des ersten Arbeitsareals durch den geschlossenen ersten Lernpfad bestimmt ist. Bevorzugt ist das erste Arbeitsareal ein Bereich der Bodenfläche, der während der Reinigung der Bodenfläche gereinigt werden soll und während der Reinigung gereinigt wird. Besonders bevorzugt weist das erste Arbeitsareal einen Bereich der Bodenfläche auf, der während der Reinigung der Bodenfläche gereinigt werden soll, und ist größer als dieser Bereich. Insbesondere wird das erste Arbeitsareal bestimmt, bevor die Bodenfläche gereinigt wird. Das erste Arbeitsareal weist eine vorgegebene geometrische Figur auf. Durch die vorgegebene geometrische Figur wird gewährleistet, dass das Arbeitsareal weniger komplex geformt sein kann als der erste Lernpfad. Insbesondere dann, wenn der erste Lernpfad durch eine Vielzahl von Ortskoordinaten beschrieben werden kann, kann die Anzahl der Ortskoordinaten für die Beschreibung der vorgegebenen geometrischen Figur deutlich geringer sein als die Anzahl der Ortskoordinaten, die für die exakte Beschreibung des ersten Lernpfads notwendig ist. Insbesondere kann durch die vorgegebene geometrische Figur des ersten Arbeitsareals der Rechenaufwand deutlich reduziert werden. Dies ist insbesondere für die Bestimmung des ersten Arbeitspfads und/oder des ersten Transportpfads innerhalb des ersten Arbeitsareals von Vorteil, da sich bei der Bestimmung an einer vergleichsweise wenig komplexen Figur des ersten Arbeitsareals orientiert werden kann. Bevorzugt ist die vorgegebene geometrische Figur ein Polygon, wie beispielsweise ein Dreieck, ein Viereck, ein Fünfeck oder ein Sechseck. Alternativ kann die vorgegebene geometrische Figur auch eine geschlossene, insbesondere ovale, Kurve, wie beispielsweise ein Kreis oder eine Ellipse sein. Die Erstreckung des ersten Arbeitsareals wird durch den geschlossenen ersten Lernpfad bestimmt. Insbesondere wird die Erstreckung des ersten Arbeitsareals so durch den geschlossenen ersten Lernpfad bestimmt, dass der erste Lernpfad innerhalb des ersten Arbeitsareals angeordnet ist. Bevorzugt definiert der erste Lernpfad eine Mindesterstreckung des ersten Arbeitsareals. Ein Bestimmen der Erstreckung des ersten Arbeitsareals durch den geschlossenen ersten Lernpfad kann dadurch erreicht werden, dass die Erstreckung des ersten Arbeitsareals durch einen Umriss des Bereichs definiert ist, mit dem die Reinigungsvorrichtung während der Bewegung der Bodenreinigungsmaschine entlang des ersten Lernpfades eingreifen würde, wenn die Reinigungsvorrichtung in der Arbeitsposition wäre. Besonders bevorzugt umfasst die Erstreckung des ersten Arbeitsareals die Abmessung des ersten Arbeitsareals in zwei senkrecht zueinander und parallel zu der zu reinigenden Bodenfläche verlaufenden Richtungen. Besonders bevorzugt ist der erste Lernpfad innerhalb des ersten Arbeitsareals angeordnet.

Für den Fall, dass der Anfang des ersten Lernpfades nicht an das Ende des ersten Lernpfades angrenzt, kann die Erstreckung des ersten Arbeitsareals durch einen Umriss des Bereichs definiert sein, mit dem die Reinigungsvorrichtung während der Bewegung der Bodenreinigungsmaschine entlang des ersten Lernpfades und bei einer Bewegung zwischen dem Ende des ersten Lernpfades und dem Anfang des ersten Lernpfades eingreifen würde, wenn die Reinigungsvorrichtung in der Arbeitsposition wäre und die Bodenreinigungsmaschine auf einem direkten Weg von dem Ende des ersten Lernpfades zu dem Anfang des ersten Lernpfades bewegt werden würde.

Das Verfahren umfasst außerdem das Bestimmen des ersten Arbeitspfads innerhalb des ersten Arbeitsareals. Das Bestimmen des ersten Arbeitspfads innerhalb des ersten Arbeitsareals ermöglicht die vorläufige Festlegung des ersten Arbeitspfads, der gegebenenfalls im weiteren Verfahren geändert werden kann. Bevorzugt ist der erste Arbeitspfad innerhalb des ersten Arbeitsareals angeordnet. Insbesondere kann vorgesehen sein, dass zunächst ein Abschnitt des ersten Arbeitspfads bestimmt wird, dann mit der Bewegung der Bodenreinigungsmaschine entlang dieses Abschnitts des ersten Arbeitspfads begonnen wird, und sodann ein weiterer Abschnitt des ersten Arbeitspfads bestimmt wird.

Das Verfahren umfasst außerdem bevorzugt das Verbringen der Reinigungsvorrichtung in die Arbeitsposition. Wie bereits beschrieben, ist es bevorzugt vorgesehen, dass die Reinigungsvorrichtung aus der Transportposition in die Arbeitsposition und aus der Arbeitsposition in die Transportposition verbracht werden kann. Besonders bevorzugt wird die Reinigungsvorrichtung aus der Transportposition in die Arbeitsposition und aus der Arbeitsposition in die Transportposition selbsttätig durch die Bodenreinigungsmaschine verbracht. Insbesondere kann die Bodenreinigungsmaschine einen Prozessor aufweisen, der so konfiguriert ist, dass die Reinigungsvorrichtung aus der Transportposition in die Arbeitsposition und aus der Arbeitsposition in die Transportposition verbracht wird. Außerdem kann ein Computerprogramm vorgesehen sein, das Befehle umfasst, die bei der Ausführung des Computerprogramms durch einen Computer, insbesondere einen Computer der Bodenreinigungsmaschine, den Computer veranlassen, dass die Reinigungsvorrichtung aus der Transportposition in die Arbeitsposition und aus der Arbeitsposition in die Transportposition verbracht wird.

Das Verfahren umfasst des Weiteren das Bewegen der Bodenreinigungsmaschine entlang des ersten Arbeitspfads, wobei die Reinigungsvorrichtung zumindest in Abschnitten des ersten Arbeitspfades in der Arbeitsposition ist. Insbesondere wird das Bewegen der Bodenreinigungsmaschine innerhalb des ersten Arbeitsareals durch die Erstreckung des ersten Arbeitsareals begrenzt, sodass die Form und Anordnung des ersten Lernpfades die Bewegung der Bodenreinigungsmaschine innerhalb des ersten Arbeitsareals begrenzt. Der erste Arbeitspfad wird bevorzugt so gewählt, dass die Reinigungsvorrichtung während der Reinigung des ersten Arbeitsareals mit dem gesamten ersten Arbeitsareal eingreift. Jedoch können Hindernisse vorgesehen sein, wie beispielsweise eine Wand eines Gebäudes, sodass lediglich ein Teilbereich des ersten Arbeitsareals gereinigt wird. Insbesondere kann der erste Arbeitspfad zumindest abschnittsweise den ersten Lernpfad aufweisen. Dass der erste Arbeitspfad zumindest abschnittsweise den geschlossenen ersten Lernpfad aufweist, kann dadurch erreicht werden, dass sich ein Abschnitt des ersten Arbeitspfads entlang des gesamten ersten Lernpfades erstreckt. Dass der erste Arbeitspfad zumindest abschnittsweise den geschlossenen ersten Lernpfad aufweist, kann alternativ auch dadurch erreicht werden, dass der erste Arbeitspfad und der erste Lernpfad einander an mehreren Stellen überlappen.

Außerdem umfasst das Verfahren das Erfassen der Umgebung der Bodenreinigungsmaschine während des Bewegens der Bodenreinigungsmaschine entlang des ersten Arbeitspfads so, dass, wenn ein Hindernis auf dem ersten Arbeitspfad angeordnet ist, das Hindernis von der Bodenreinigungsmaschine erfasst wird. Wie bereits beschrieben umfasst das Verfahren das Bestimmen des ersten Arbeitspfads innerhalb des ersten Arbeitsareals. Hierbei kann der erste Arbeitspfad zunächst so bestimmt werden, dass, wenn sich die Bodenreinigungsmaschine entlang des gesamten ersten Arbeitspfads bewegen würde ohne dass dieser geändert wird, die Bodenreinigungsmaschine mit einem Hindernis kollidieren würde. Da die Bodenreinigungsmaschine das Hindernis bevorzugt mit mindestens einem Sensor der Bodenreinigungsmaschine erfasst, kann eine derartige Kollision vermieden werden.

Schließlich umfasst das Verfahren dann, wenn ein Hindernis auf dem ersten Arbeitspfad angeordnet ist, das Ändern des ersten Arbeitspfads zumindest abschnittsweise so, dass die Bodenreinigungsmaschine nicht mit dem Hindernis kollidiert. Durch das Ändern des ersten Arbeitspfads zumindest abschnittsweise so, dass die Bodenreinigungsmaschine nicht mit dem Hindernis kollidiert, kann eine sichere Reinigung der Bodenfläche gewährleistet werden.

Die Bodenreinigungsmaschine wird also entlang des ersten Lernpfades bewegt, der wiederum die Erstreckung des ersten Arbeitsareals bestimmt. Somit kann je nach Bewegung der Bodenreinigungsmaschine, und die dadurch bestimmte Anordnung und Form des Lernpfades, die Erstreckung des ersten Arbeitsareals bestimmt werden, sodass ein Benutzer durch die Bewegung der Bodenreinigungsmaschine besonders einfach Einfluss auf die Anordnung und Form des ersten Arbeitsareals nehmen kann. Insbesondere ist das erste Arbeitsareal durch seine vorgegebene geometrische Figur und seine Erstreckung festgelegt, die wiederum durch den ersten Lernpfad festgelegt ist, sodass auf ein Bewegen der Bodenreinigungsmaschine innerhalb des gesamten ersten Arbeitsareals zur Bestimmung des ersten Arbeitsareals verzichtet werden kann, sodass das erste Arbeitsareal besonders effizient bestimmt werden kann.

Zusammenfassend kann also festgestellt werden, dass auf benutzerfreundliche und effiziente Weise ein zu reinigender Bereich der Bodenfläche bestimmt und eine sichere Reinigung der Bodenfläche gewährleistet werden kann.

Wie bereits beschrieben, kann sich ein Abschnitt des ersten Arbeitspfads entlang des gesamten ersten Lernpfades erstrecken. Insbesondere für den Fall, dass sich ein Abschnitt des ersten Arbeitspfads entlang des gesamten ersten Lernpfades erstreckt, kann vorgesehen sein, dass ein zu dem ersten Lernpfad nach Innen versetzt angeordneter Arbeitspfadabschnitt des ersten Arbeitspfads vorgesehen ist, wobei sich der nach Innen versetzt angeordnete Arbeitspfadabschnitt zumindest abschnittsweise parallel zu dem ersten Lernpfad erstreckt. Durch den nach Innen versetzt angeordneten Arbeitspfadabschnitt kann besonders bevorzugt gewährleistet werden, dass die Bodenfläche vollständig auch in Bereichen der Enden von parallel zueinander verlaufenden Abschnitten des ersten Arbeitspfades gereinigt wird. Bevorzugt sind weitere zueinander nach Innen versetzt angeordnete Arbeitspfadabschnitte des ersten Arbeitspfads vorgesehen. Außerdem kann zu jedem Lernpfad ein nach Innen versetzt angeordneter Arbeitspfadabschnitt eines entsprechenden Arbeitspfads vorgesehen sein.

Außerdem kann ein umlaufender erster Abschnitt des ersten Arbeitspfads so angeordnet sein, dass dieser Abschnitt den restlichen ersten Arbeitspfad außenseitig umläuft. Insbesondere kann ein umlaufender zweiter Abschnitt des ersten Arbeitspfads so angeordnet sein, dass dieser Abschnitt innerhalb des umlaufenden ersten Abschnitts angeordnet ist und wiederum den restlichen ersten Arbeitspfad, d.h. den ersten Arbeitspfad außer dem umlaufenden ersten Abschnitt und dem umlaufenden zweiten Abschnitt, außenseitig umläuft. Hierbei können sich der umlaufende erste Abschnitt und der umlaufende zweite Abschnitt zumindest abschnittsweise parallel zueinander erstrecken. Durch umlaufenden zweiten Abschnitt kann besonders bevorzugt gewährleistet werden, dass die Bodenfläche vollständig auch in Bereichen der Enden von parallel zueinander verlaufenden Abschnitten des ersten Arbeitspfades gereinigt wird.

Erfindungsgemäß umfasst das Verfahren außerdem ein Bestimmen eines ersten Transportpfads in dem ersten Arbeitsareal, ein Verbringen der Reinigungsvorrichtung in eine Transportposition, und ein Bewegen der Bodenreinigungsmaschine entlang des ersten Transportpfads, wobei die Reinigungsvorrichtung zumindest in Abschnitten des ersten Transportpfads in der Transportposition ist. Das Bestimmen des ersten Transportpfads in dem ersten Arbeitsareal ermöglicht eine effiziente Bewegung der Bodenreinigungsmaschine innerhalb des ersten Arbeitsareals, insbesondere für den Fall, dass neben der Reinigung des ersten Arbeitsareals eine Reinigung eines weiteren Arbeitsareals, wie beispielsweise eines zweiten Arbeitsareals, vorgesehen ist. Ein Bewegen der Bodenreinigungsmaschine entlang eines Transportpfads kann so verstanden werden, dass die Bodenreinigungsmaschine von einem ersten Ende zu einem zweiten Ende des Transportpfads bewegt wird. Alternativ, kann ein Bewegen der Bodenreinigungsmaschine entlang eines Transportpfads auch so verstanden werden, dass die Bodenreinigungsmaschine von dem ersten Ende des Transportpfads zu einem vorgegebenen ersten Punkt auf dem Transportpfad bewegt wird oder dass die Bodenreinigungsmaschine von einem vorgegebenen zweiten Punkt auf dem Transportpfad zu dem zweiten Ende des Transportpfads bewegt wird. Alternativ kann die Bodenreinigungsmaschine auch so entlang des Transportpfads bewegt werden, dass die Bodenreinigungsmaschine von dem vorgegebenen ersten Punkt auf dem Transportpfad zu dem vorgegebenen zweiten Punkt auf dem Transportpfad bewegt wird. Beispielsweise kann dann, wenn die Bodenreinigungsmaschine an dem ersten Punkt und/oder an dem zweiten Punkt ist, die Reinigungsvorrichtung in die Arbeitsposition und/oder in die Transportposition verbracht werden, sodass die Bodenreinigungsmaschine an dem ersten Punkt und/oder an dem zweiten Punkt einen Reinigungsvorgang beginnen und/oder beenden kann.

Erfindungsgemäß umfasst das Verfahren außerdem ein Bewegen der Bodenreinigungsmaschine über die zu reinigende Bodenfläche entlang eines geschlossenen zweiten Lernpfades, ein Bestimmen eines zumindest einen Abschnitt der zu reinigenden Bodenfläche aufweisenden zweiten Arbeitsareals mit einer vorgegebenen geometrischen Figur, wobei die Erstreckung des zweiten Arbeitsareals durch den geschlossenen zweiten Lernpfad bestimmt ist, ein Bestimmen eines zweiten Arbeitspfads innerhalb des zweiten Arbeitsareals ein Bewegen der Bodenreinigungsmaschine entlang des zweiten Arbeitspfads, wobei die Reinigungsvorrichtung zumindest in Abschnitten des zweiten Arbeitspfades in der Arbeitsposition ist, ein Erfassen der Umgebung der Bodenreinigungsmaschine während des Bewegens der Bodenreinigungsmaschine entlang des zweiten Arbeitspfads so, dass, wenn ein Hindernis auf dem zweiten Arbeitspfad angeordnet ist, das Hindernis von der Bodenreinigungsmaschine erfasst wird, und dann, wenn ein Hindernis auf dem zweiten Arbeitspfad angeordnet ist, ein Ändern des zweiten Arbeitspfads zumindest abschnittsweise so, dass die Bodenreinigungsmaschine nicht mit dem Hindernis kollidiert. Die im Zusammenhang mit dem ersten Lernpfad, mit dem ersten Arbeitsareal und mit dem ersten Arbeitspfad beschriebenen Merkmale, technischen Effekte und/oder Vorteile gelten zumindest in analoger Weise auch für den zweiten Lernpfad, das zweite Arbeitsareal und den zweiten Arbeitspfad, sodass an dieser Stelle auf eine entsprechende Wiederholung verzichtet wird.

Bei dieser Ausführungsform des Verfahrens kann auch in der Weise vorgegangen werden, dass die Bodenreinigungsmaschine über die zu reinigende Bodenfläche entlang eines geschlossenen ersten Lernpfades bewegt wird und ein zumindest einen Abschnitt der zu reinigenden Bodenfläche aufweisendes erstes Arbeitsareal mit einer vorgegebenen geometrischen Figur bestimmt wird, wobei die Erstreckung des ersten Arbeitsareals durch den geschlossenen ersten Lernpfad bestimmt ist. Anschließend wird die Bodenreinigungsmaschine über die zu reinigende Bodenfläche entlang eines geschlossenen zweiten Lernpfades bewegt und es wird ein zumindest einen Abschnitt der zu reinigenden Bodenfläche aufweisendes zweites Arbeitsareal mit einer vorgegebenen geometrischen Figur bestimmt, wobei die Erstreckung des zweiten Arbeitsareals durch den geschlossenen zweiten Lernpfad bestimmt ist. Schließlich wird die Reinigungsvorrichtung in die Arbeitsposition verbracht, und die Bodenreinigungsmaschine wird innerhalb des ersten Arbeitsareals entlang eines ersten Arbeitspfads, der zumindest abschnittsweise den geschlossenen ersten Lernpfad aufweisen kann, und innerhalb des zweiten Arbeitsareals entlang eines zweiten Arbeitspfads, der zumindest abschnittsweise den geschlossenen zweiten Lernpfad aufweisen kann, bewegt. Ähnlich wie hier beschrieben, kann die Bodenreinigungsmaschine auch entlang beliebig vieler geschlossener Lernpfade bewegt werden und beliebig viele jeweils zumindest einen Abschnitt der zu reinigenden Bodenfläche bildende Arbeitsareale jeweils mit einer vorgegebenen geometrischen Figur bestimmt werden, wobei die Erstreckung jedes Arbeitsareals durch jeweils einen der geschlossenen Lernpfade bestimmt ist. Anschließend kann die Reinigungsvorrichtung in die Arbeitsposition verbracht werden, und die Bodenreinigungsmaschine innerhalb jedes der Arbeitsareale nacheinander entlang eines entsprechenden Arbeitspfads, der zumindest abschnittsweise einen der geschlossenen Lernpfade aufweisen kann, bewegt werden. Insbesondere ist vorgesehen, dass die Bodenreinigungsmaschine nacheinander entlang einer Teilmenge der Arbeitspfade bewegt wird. Insbesondere kann sich die Teilmenge der Arbeitspfade, insbesondere an aufeinander folgenden Tagen und/oder je nach Verschmutzung der entsprechenden Arbeitsareale, ändern, sodass die Bodenreinigungsmaschine nacheinander entlang sich unterscheidenden Teilmengen der Arbeitspfade bewegt wird. Beispielsweise kann die Bodenreinigungsmaschine entlang eines geschlossenen ersten Lernpfads, entlang eines geschlossenen zweiten Lernpfads und entlang eines geschlossenen dritten Lernpfads bewegt werden und ein zumindest einen Abschnitt der zu reinigenden Bodenfläche bildendes erstes Arbeitsareal, ein zumindest einen Abschnitt der zu reinigenden Bodenfläche bildendes zweites Arbeitsareal und ein zumindest einen Abschnitt der zu reinigenden Bodenfläche bildendes drittes Arbeitsareal bestimmt werden. In diesem Fall ist die Erstreckung des ersten Arbeitsareals durch den geschlossenen ersten Lernpfad bestimmt, die Erstreckung des zweiten Arbeitsareals ist durch den geschlossenen zweiten Lernpfad bestimmt und die Erstreckung des dritten Arbeitsareals ist durch den geschlossenen dritten Lernpfad bestimmt. Insbesondere für den Fall, dass mehrere Arbeitsareale vorgesehen sind, können sich jeweils zwei Arbeitsareale der mehreren Arbeitsareal zumindest abschnittsweise überlappen. Insbesondere können sich zwei benachbarte Arbeitsareale zumindest abschnittsweise überlappen.

Erfindungsgemäß umfasst das Verfahren außerdem ein Bestimmen eines zweiten Transportpfads in dem zweiten Arbeitsareal, ein Verbringen der Reinigungsvorrichtung in eine Transportposition, und ein Bewegen der Bodenreinigungsmaschine entlang des zweiten Transportpfads, wobei die Reinigungsvorrichtung zumindest in Abschnitten des zweiten Transportpfads in der Transportposition ist. Die im Zusammenhang mit dem ersten Transportpfad beschriebenen Merkmale, technischen Effekte und/oder Vorteile gelten zumindest in analoger Weise auch für den zweiten Transportpfad, sodass an dieser Stelle auf eine entsprechende Wiederholung verzichtet wird.

Erfindungsgemäß umfasst das Verfahren außerdem ein Bestimmen eines Verbindungspfads, der den ersten Transportpfad und den zweiten Transportpfad miteinander verbindet, ein Verbringen der Reinigungsvorrichtung in eine Transportposition, und ein Bewegen der Bodenreinigungsmaschine entlang des Verbindungspfads, wobei die Reinigungsvorrichtung zumindest in Abschnitten des Verbindungspfads in der Transportposition ist. Das Bestimmen des Verbindungspfads und das Bewegen der Bodenreinigungsmaschine entlang des Verbindungspfads, der den ersten Transportpfad und den zweiten Transportpfad miteinander verbindet, ermöglicht eine effiziente Bewegung der Bodenreinigungsmaschine zwischen dem ersten Arbeitsareal und dem zweiten Arbeitsareal.

Gegenüber dem US-Patent mit der Patentnummer 5,568,589 unterscheidet sich der Patentanspruch 1 insbesondere dadurch, dass der Patentanspruch 1 definiert, dass das Verfahren außerdem folgenden Schritt umfasst: Bestimmen eines ersten Transportpfads in dem ersten Arbeitsareal, Verbringen der Reinigungsvorrichtung in eine Transportposition, und Bewegen der Bodenreinigungsmaschine entlang des ersten Transportpfads, wobei die Reinigungsvorrichtung zumindest in Abschnitten des ersten Transportpfads in der Transportposition ist, wobei das Verfahren außerdem folgende Schritte umfasst: Bewegen der Bodenreinigungsmaschine über die zu reinigende Bodenfläche entlang eines geschlossenen zweiten Lernpfades, Bestimmen eines zumindest einen Abschnitt der zu reinigenden Bodenfläche aufweisenden zweiten Arbeitsareals mit einer vorgegebenen geometrischen Figur, wobei die Erstreckung des zweiten Arbeitsareals durch den geschlossenen zweiten Lernpfad bestimmt ist, Bestimmen eines zweiten Arbeitspfads innerhalb des zweiten Arbeitsareals, Bewegen der Bodenreinigungsmaschine entlang des zweiten Arbeitspfads, wobei die Reinigungsvorrichtung zumindest in Abschnitten des zweiten Arbeitspfades in der Arbeitsposition ist, Erfassen der Umgebung der Bodenreinigungsmaschine während des Bewegens der Bodenreinigungsmaschine entlang des zweiten Arbeitspfads so, dass, wenn ein Hindernis auf dem zweiten Arbeitspfad angeordnet ist, das Hindernis von der Bodenreinigungsmaschine erfasst wird, und wenn ein Hindernis auf dem zweiten Arbeitspfad angeordnet ist, Ändern des zweiten Arbeitspfads zumindest abschnittsweise so, dass die Bodenreinigungsmaschine nicht mit dem Hindernis kollidiert, wobei das Verfahren außerdem folgenden Schritt umfasst: Bestimmen eines zweiten Transportpfads in dem zweiten Arbeitsareal, Verbringen der Reinigungsvorrichtung in eine Transportposition, und Bewegen der Bodenreinigungsmaschine entlang des zweiten Transportpfads, wobei die Reinigungsvorrichtung zumindest in Abschnitten des zweiten Transportpfads in der Transportposition ist, wobei das Verfahren außerdem folgenden Schritt umfasst: Bestimmen eines ersten Verbindungspfads, der den ersten Transportpfad und den zweiten Transportpfad miteinander verbindet, Verbringen der Reinigungsvorrichtung in eine Transportposition, und Bewegen der Bodenreinigungsmaschine entlang des Verbindungspfads, wobei die Reinigungsvorrichtung zumindest in Abschnitten des Verbindungspfads in der Transportposition ist.

Die aus diesem Unterschied resultierende technische Wirkung ist, dass eine effiziente Bewegung der Bodenreinigungsmaschine gewährleistet wird, u.a. da der erfindungsgemäße Verbindungspfad gewährleistet, dass die Bodenreinigungsmaschine effizient zwischen dem ersten Arbeitsareal und dem zweiten Arbeitsareal bewegt werden kann.

Wie bereits beschrieben, kann die Bodenreinigungsmaschine entlang beliebig vieler geschlossener Lernpfade bewegt werden und beliebig viele zumindest einen Abschnitt der zu reinigenden Bodenfläche bildende Arbeitsareale bestimmt werden, wobei die Erstreckung jedes Arbeitsareals durch jeweils einen der geschlossenen Lernpfade bestimmt ist. In jedem Arbeitsareal kann ein Transportpfad bestimmt werden und die Bodenreinigungsmaschine entlang jedes Transportpfads bewegt werden während die Reinigungsvorrichtung in die Transportposition verbracht ist. Wenn mehrere Arbeitsareale vorgesehen sind, können jeweils zwei Arbeitsareale der mehreren Arbeitsareale als benachbarte Arbeitsareale bezeichnet werden. Zwei Arbeitsareale werden insbesondere dann als benachbarte Arbeitsareale bezeichnet, wenn zwischen den zwei Arbeitsarealen kein weiteres Arbeitsareal der mehreren Arbeitsareal angeordnet ist. Insbesondere kann mindestens ein Verbindungspfad bestimmt werden, wobei bevorzugt jeder Verbindungspfad des mindestens einen Verbindungspfads jeweils zwei Transportpfade miteinander verbindet. Insbesondere kann jeder Verbindungspfad des mindestens einen Verbindungspfads jeweils zwei Transportpfade miteinander verbinden, wobei jeweils ein erster Transportpfad der zwei Transportpfade in einem ersten Arbeitsareal angeordnet ist und jeweils ein zweiter Transportpfad der zwei Transportpfade in einem zweiten Arbeitsareal angeordnet ist und jeweils das erste Arbeitsareal und das zweite Arbeitsareal benachbarte Arbeitsareale sind. So kann, wenn die Bodenreinigungsmaschine von einem ersten Arbeitsareal zu einem zweiten Arbeitsareal bewegt werden soll, die keine benachbarten Arbeitsareale sind, die Bodenreinigungsmaschine entlang mindestens eines Transportpfads und entlang mindestens zweier Verbindungspfade von dem ersten Arbeitsareal zu dem zweiten Arbeitsareal bewegt werden während die Reinigungsvorrichtung in die Transportposition verbracht ist, ohne, dass das mindestens eine Arbeitsareal, das zwischen dem ersten Arbeitsareal und dem zweiten Arbeitsareal angeordnet ist und den mindestens einen Transportpfad aufweist, gereinigt wird.

Bevorzugt ist vorgesehen, dass die Bewegung der Bodenreinigungsmaschine entlang jedes Arbeitspfads, jedes Transportpfads und jedes Verbindungspfads selbsttätig durch die Bodenreinigungsmaschine ausgeführt wird. Insbesondere kann die Bodenreinigungsmaschine einen Prozessor aufweisen, der so konfiguriert ist, dass sich die Bodenreinigungsmaschine entlang jedes Arbeitspfads, jedes Transportpfads und jedes Verbindungspfads bewegt. Außerdem kann ein Computerprogramm vorgesehen sein, das Befehle umfasst, die bei der Ausführung des Computerprogramms durch einen Computer, insbesondere einen Computer der Bodenreinigungsmaschine, den Computer veranlassen, dass sich die Bodenreinigungsmaschine entlang jedes Arbeitspfads, jedes Transportpfads und jedes Verbindungspfads bewegt.

In einer Ausführungsform umfasst das Verfahren außerdem ein Erfassen der Umgebung der Bodenreinigungsmaschine während der Bewegung der Bodenreinigungsmaschine entlang des geschlossenen ersten Lernpfades und/oder ein Erfassen der Umgebung der Bodenreinigungsmaschine während der Bewegung der Bodenreinigungsmaschine entlang des geschlossenen zweiten Lernpfades und/oder ein Erfassen der Umgebung der Bodenreinigungsmaschine während der Bewegung der Bodenreinigungsmaschine entlang des geschlossenen dritten Lernpfades, und ein Erstellen einer die erfasste Umgebung der Bodenreinigungsmaschine repräsentierende Karte anhand der erfassten Umgebung der Bodenreinigungsmaschine. Die Karte, die die erfasste Umgebung der Bodenreinigungsmaschine repräsentiert, kann bei der Bestimmung des ersten Arbeitspfads, des zweiten Arbeitspfads, des ersten Transportpfads, des zweiten Transportpfads und/oder des Verbindungspfads berücksichtigt werden, sodass durch eine vorteilhafte Form und Anordnung des ersten Arbeitspfads, des zweiten Arbeitspfads, des ersten Transportpfads, des zweiten Transportpfads und/oder des Verbindungspfads eine effiziente Bewegung der Bodenreinigungsmaschine ermöglicht wird. Insbesondere für den Fall, dass mehrere geschlossene Lernpfade vorgesehen sind, kann die Umgebung der Bodenreinigungsmaschine während der Bewegung der Bodenreinigungsmaschine entlang jedes der Lernpfade erfasst werden und eine die erfasste Umgebung der Bodenreinigungsmaschine repräsentierende Karte anhand der erfassten Umgebung der Bodenreinigungsmaschine erstellt werden. Die Karte kann bei der Bestimmung jedes Arbeitspfads, jedes Transportpfads, und/oder jedes Verbindungspfads berücksichtigt werden, sodass durch eine vorteilhafte Form und Anordnung jedes Arbeitspfads, jedes Transportpfads und/oder jedes Verbindungspfads eine effiziente Bewegung der Bodenreinigungsmaschine ermöglicht wird.

Insbesondere dann, wenn ein Hindernis oder mehrere Hindernisse auf dem Arbeitsareal so angeordnet ist/sind, dass der erste Lernpfad und/oder der zweite Lernpfad des Hindernis oder die mehreren Hindernisse umläuft, kann die Karte bei der Bestimmung des ersten Arbeitspfads, des zweiten Arbeitspfads, des ersten Transportpfads, des zweiten Transportpfads und/oder des Verbindungspfads berücksichtigt werden, und so eine effiziente Bewegung der Bodenreinigungsmaschine ermöglicht werden.

Insbesondere kann die Umgebung der Bodenreinigungsmaschine auch während der Bewegung der Bodenreinigungsmaschine entlang des ersten Arbeitspfads, des zweiten Arbeitspfads, des ersten Transportpfads, des zweiten Transportpfads und/oder des Verbindungspfads neu erfasst werden, und so bei der Bewegung der Bodenreinigungsmaschine entlang des ersten Arbeitspfads, des zweiten Arbeitspfads, des ersten Transportpfads, des zweiten Transportpfads und/oder des Verbindungspfads berücksichtigt werden und so eine Kollision selbst bei einer sich ändernden Umgebung der Bodenreinigungsmaschine verhindert werden. Anschließend kann die bereits erstellte Karte derart geändert werden, dass die Karte die neu erfasste Umgebung der Bodenreinigungsmaschine repräsentiert.

Die Karte, die die neu erfasste Umgebung der Bodenreinigungsmaschine repräsentiert, kann bei der Bestimmung des ersten Arbeitspfads, des zweiten Arbeitspfads, des ersten Transportpfads, des zweiten Transportpfads und/oder des Verbindungspfads berücksichtigt werden, sodass durch eine vorteilhafte Form und Anordnung des ersten Arbeitspfads, des zweiten Arbeitspfads, des ersten Transportpfads, des zweiten Transportpfads und/oder des Verbindungspfads eine effiziente Bewegung der Bodenreinigungsmaschine ermöglicht wird, selbst bei einer sich ändernden Umgebung der Bodenreinigungsmaschine. Die Umgebung der Bodenreinigungsmaschine wird bevorzugt mit mindestens einem Sensor der Bodenreinigungsmaschine erfasst. Insbesondere wird die Umgebung der Bodenreinigungsmaschine mit mindestens einem Ultraschallsensor und/oder mit mindestens einem Infrarotsensor und/oder mit mindestens einem Lasersensor erfasst. Jeder Sensor des mindestens einen Sensors kann ein Sensor einer Kamera und/oder eines Scanners sein. Insbesondere kann jeder Sensor des mindestens einen Sensors ein Sensor eines 3D-Sensors und/oder einer 3D-Kamera und/oder eines 3D-Scanners sein.

In einer Ausführungsform umfasst das Verfahren außerdem ein Hinzufügen des ersten Arbeitsareals und/oder des zweiten Arbeitsareals zu der Karte, sodass das erste Arbeitsareal und/oder das zweite Arbeitsareal in der Karte repräsentiert ist/sind. Insbesondere wenn das erste Arbeitsareal und/oder das zweite Arbeitsareal in der Karte repräsentiert ist/sind, kann/können das erste Arbeitsareal und/oder das zweite Arbeitsareal bei der Bestimmung des ersten Arbeitspfads, des zweiten Arbeitspfads, des ersten Transportpfads, des zweiten Transportpfads und/oder des Verbindungspfads berücksichtigt werden.

In einer Ausführungsform umfasst das Verfahren außerdem ein Hinzufügen des ersten Arbeitspfads und/oder des zweiten Arbeitspfads zu der Karte, sodass der erste Arbeitspfad und/oder der zweite Arbeitspfad in der Karte repräsentiert ist. Insbesondere wenn der erste Arbeitspfad und/oder der zweite Arbeitspfad in der Karte repräsentiert ist/sind, kann/können der erste Arbeitspfad und/oder der zweite Arbeitspfad bei der Bestimmung des ersten Arbeitsareals, des zweiten Arbeitsareals, des ersten Transportpfads, des zweiten Transportpfads und/oder des Verbindungspfads berücksichtigt werden.

In einer Ausführungsform umfasst das Verfahren außerdem ein Hinzufügen des ersten Transportpfads und/oder des zweiten Transportpfads zu der Karte, sodass der erste Transportpfad und/oder der zweite Transportpfad in der Karte repräsentiert ist/sind. Insbesondere wenn der erste Transportpfad und/oder der zweite Transportpfad in der Karte repräsentiert ist/sind, kann/können der erste Transportpfad und/oder der zweite Transportpfad bei der Bestimmung des ersten Arbeitspfads, des zweiten Arbeitspfads und/oder des Verbindungspfads berücksichtigt werden.

In einer Ausführungsform umfasst das Verfahren außerdem ein Hinzufügen des Verbindungspfads zu der Karte, sodass der Verbindungspfad in der Karte repräsentiert ist. Insbesondere wenn der Verbindungspfad in der Karte repräsentiert ist, kann der Verbindungspfad bei der Bestimmung des ersten Arbeitspfads, des zweiten Arbeitspfads, des ersten Transportpfads und/oder des zweiten Transportpfads berücksichtigt werden.

Besonders bevorzugt wird die Umgebung der Bodenreinigungsmaschine erfasst und die die erfasste Umgebung der Bodenreinigungsmaschine repräsentierende Karte erstellt während die Bodenreinigungsmaschine über die zu reinigende Bodenfläche entlang mindestens eines Lernpfades, wie beispielsweise des ersten, zweiten und/oder dritten Lernpfades, bewegt wird. Anschließend wird bevorzugt mindestens eine Erstreckung bestimmt, wobei jede Erstreckung ein Arbeitsareal definiert und durch einen entsprechenden Lernpfad bestimmt ist. Bevorzugt wird in jedem Arbeitsareal ein Transportpfad bestimmt. Insbesondere wird anschließend in jedem Arbeitsareal ein Arbeitspfad bestimmt, der zumindest abschnittsweise den in demselben Arbeitsareal angeordneten Lernpfad aufweisen kann.

Insbesondere kann der Prozessor so konfiguriert sein bzw. das Computerprogramm Befehle umfassen, die bei der Ausführung des Computerprogramms durch den Computer, insbesondere den Computer der Bodenreinigungsmaschine, den Computer veranlassen, die Umgebung der Bodenreinigungsmaschine zu erfassen, die die erfasste Umgebung der Bodenreinigungsmaschine repräsentierende Karte zu erstellen, die erstellte Karte in einem Datenspeicher der Bodenreinigungsmaschine zu speichern, die mindestens eine Erstreckung zu bestimmen und in dem Datenspeicher der Bodenreinigungsmaschine zu speichern, das mindestens eine Arbeitsareal zu bestimmen und in dem Datenspeicher der Bodenreinigungsmaschine zu speichern, den mindestens einen Transportpfad zu bestimmen und in dem Datenspeicher der Bodenreinigungsmaschine zu speichern, den mindestens einen Arbeitspfad zu bestimmen und in dem Datenspeicher der Bodenreinigungsmaschine zu speichern und den mindestens einen Verbindungspfad zu bestimmen und in dem Datenspeicher der Bodenreinigungsmaschine zu speichern. Insbesondere kann der Prozessor so konfiguriert sein bzw. das Computerprogramm Befehle umfassen, die bei der Ausführung des Computerprogramms durch den Computer, insbesondere den Computer der Bodenreinigungsmaschine, den Computer veranlassen, die im Zusammenhang mit der vorliegenden Erfindung beschriebenen Verfahrensschritte durchzuführen.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine schematische Draufsicht einer zu reinigenden ersten Bodenfläche, die mit einer ersten Ausführungsform eines erfindungsgemäßen Verfahrens gereinigt werden kann.
- Figur 2: zeigt eine schematische Draufsicht der in Figur 1 dargestellten zu reinigenden ersten Bodenfläche.
- Figur 3: zeigt eine schematische Draufsicht der in Figur 1 dargestellten zu reinigenden ersten Bodenfläche.
- Figur 4: zeigt eine schematische Draufsicht der in Figur 1 dargestellten zu reinigenden ersten Bodenfläche.
- Figur 5: zeigt eine schematische Draufsicht einer zu reinigenden zweiten Bodenfläche, die mit einer zweiten Ausführungsform des erfindungsgemäßen Verfahrens gereinigt werden kann.
- Figur 6: zeigt eine schematische Draufsicht einer zu reinigenden dritten Bodenfläche, die mit einer dritten Ausführungsform des erfindungsgemäßen Verfahrens gereinigt werden kann.
- Figur 7: zeigt eine schematische Draufsicht der in Figur 6 dargestellten zu reinigenden dritten Bodenfläche, auf der ein erstes Hindernis angeordnet ist.
- Figur 8: zeigt eine schematische Draufsicht der in Figur 6 dargestellten zu reinigenden dritten Bodenfläche, auf der ein zweites Hindernis angeordnet ist.
- Figur 9: zeigt eine schematische Draufsicht der in Figur 6 dargestellten zu reinigenden dritten Bodenfläche, auf der ein drittes Hindernis angeordnet ist.

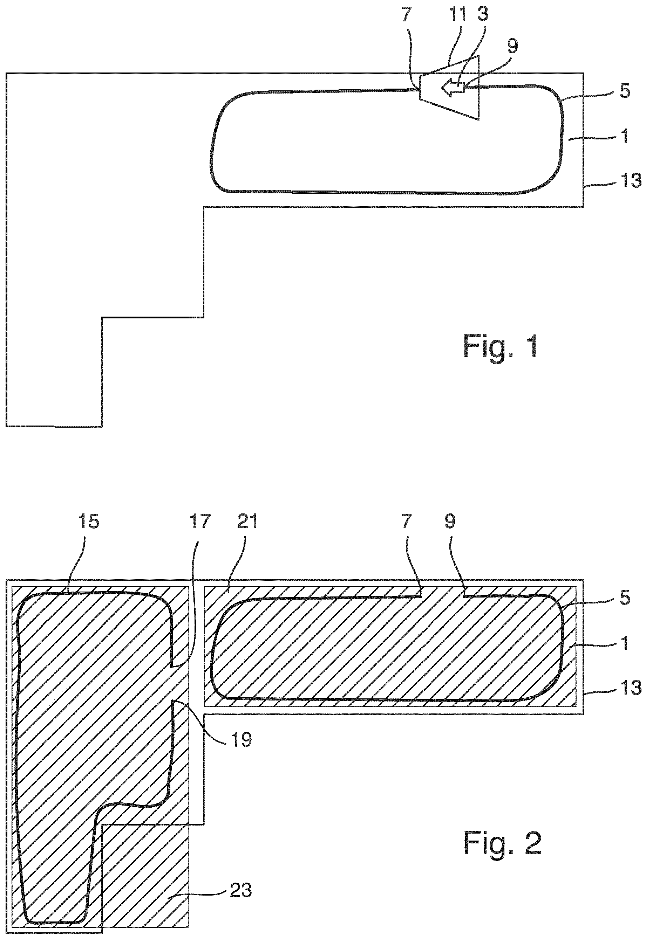

Figur 1 zeigt eine schematische Draufsicht einer zu reinigenden ersten Bodenfläche 1, die mit einer ersten Ausführungsform eines erfindungsgemäßen Verfahrens gereinigt werden kann. Eine Bodenreinigungsmaschine 3 ist in Figur 1 als Pfeil symbolisiert dargestellt. Die Bodenreinigungsmaschine 3 weist ein Fahrwerk und eine Reinigungsvorrichtung auf. Das Fahrwerk gewährleistet, dass die Bodenreinigungsmaschine 3 über die zu reinigende erste Bodenfläche 1 bewegt werden kann. Die Reinigungsvorrichtung ist an dem Fahrwerk befestigt und kann in eine und aus einer Arbeitsposition verbracht werden. In der Arbeitsposition greift die Reinigungsvorrichtung mit der zu reinigenden ersten Bodenfläche 1 ein, sodass diese beim Bewegen der Bodenreinigungsmaschine 3 über die zu reinigende erste Bodenfläche 1 gereinigt werden kann. Die Reinigungsvorrichtung kann aus einer Transportposition in die Arbeitsposition und aus der Arbeitsposition in die Transportposition verbracht werden. In der Transportposition greift die Reinigungsvorrichtung nicht mit der zu reinigenden ersten Bodenfläche 1 ein, sodass eine effiziente Bewegung der Bodenreinigungsmaschine 3 zu der, von der und über die zu reinigende erste Bodenfläche 1 ermöglicht wird.

Figur 1 zeigt einen geschlossenen ersten Lernpfad 5, der sich von einem Anfang 7 des ersten Lernpfades 5 zu einem Ende 9 des ersten Lernpfades 5 erstreckt. Ein Endbereich 11 ist dargestellt, an den der Anfang 7 des ersten Lernpfads 5 angrenzt und in dem die Bodenreinigungsmaschine 3 und das Ende 9 des ersten Lernpfads 5 angeordnet sind. Die zu reinigende erste Bodenfläche 1 wird von einer Begrenzungslinie 13 begrenzt, die im vorliegenden Beispiel durch eine Wand eines Gebäudes definiert ist.

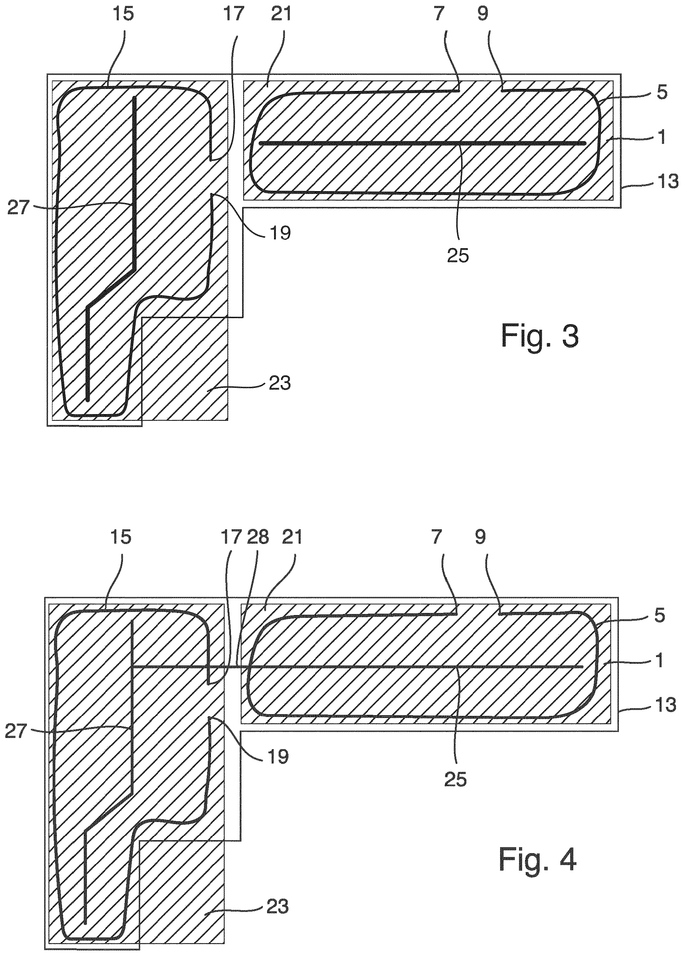

Figur 2 zeigt eine schematische Draufsicht der in Figur 1 dargestellten zu reinigenden ersten Bodenfläche 1. Ein geschlossener zweiter Lernpfad 15 erstreckt sich von einem Anfang 17 des zweiten Lernpfads 15 zu einem Ende 19 des zweiten Lernpfads 15. Des Weiteren zeigt Figur 2 ein erstes Arbeitsareal 21 und ein zweites Arbeitsareal 23. Figur 3 zeigt eine schematische Draufsicht der in Figur 1 dargestellten zu reinigenden ersten Bodenfläche 1. In Figur 3 sind zusätzlich ein erster Transportpfad 25 und ein zweiter Transportpfad 27 dargestellt. Figur 4 zeigt eine schematische Draufsicht der in Figur 1 dargestellten zu reinigenden ersten Bodenfläche 1. In Figur 4 ist zusätzlich ein erster Verbindungspfad 28 dargestellt, der den ersten Transportpfad 25 und den zweiten Transportpfad 27 miteinander verbindet.

Zunächst wird die Bodenreinigungsmaschine 3 über die zu reinigende erste Bodenfläche 1 entlang des geschlossenen ersten Lernpfades 5 und entlang des geschlossenen zweiten Lernpfades 15 bewegt. Das erste Arbeitsareal 21 und das zweite Arbeitsareal 23 werden bestimmt. Das erste Arbeitsareal 21 und das zweite Arbeitsareal 23 weisen jeweils einen Abschnitt der zu reinigenden ersten Bodenfläche 1 auf. Das erste Arbeitsareal 21 und das zweite Arbeitsareal 23 weisen jeweils eine vorgegebene geometrische Figur auf, die jeweils ein Viereck ist. Das erste Arbeitsareal 21 und das zweite Arbeitsareal 23 werden jeweils so bestimmt, dass die Erstreckung des ersten Arbeitsareals 21 durch den geschlossenen ersten Lernpfad 5 bestimmt ist und die Erstreckung des zweiten Arbeitsareals 23 durch den geschlossenen zweiten Lernpfad 15 bestimmt ist.

Des Weiteren werden der erste Transportpfad 25 in dem ersten Arbeitsareal 21 und der zweite Transportpfad 27 in dem zweiten Arbeitsareal 23 bestimmt. Der erste Transportpfad 25 ist innerhalb des ersten Lernpfades 5 angeordnet und der zweite Transportpfad 27 ist innerhalb des zweiten Lernpfades 15 angeordnet. Wenn der erste Transportpfad 25 und der zweite Transportpfad 27 bestimmt sind, wird der erste Verbindungspfad 28 bestimmt, der den ersten Transportpfad 25 und den zweiten Transportpfad 27 miteinander verbindet.

Außerdem wird ein erster Arbeitspfad innerhalb des ersten Arbeitsareals 21 und ein zweiter Arbeitspfad innerhalb des zweiten Arbeitsareals 23 bestimmt. Die Reinigungsvorrichtung wird in die Arbeitsposition verbracht und die Bodenreinigungsmaschine 3 wird innerhalb des ersten Arbeitsareals 21 entlang des ersten Arbeitspfads bewegt. Die Reinigungsvorrichtung ist zumindest in Abschnitten des ersten Arbeitspfades in der Arbeitsposition. Während des Bewegens der Bodenreinigungsmaschine 3 entlang des ersten Arbeitspfads wird die Umgebung der Bodenreinigungsmaschine 3 so erfasst, dass, wenn ein Hindernis auf dem ersten Arbeitspfad angeordnet ist, das Hindernis von der Bodenreinigungsmaschine erfasst wird. Wenn ein Hindernis auf dem ersten Arbeitspfad angeordnet ist, wird der erste Arbeitspfad zumindest abschnittsweise so geändert, dass die Bodenreinigungsmaschine nicht mit dem Hindernis kollidiert. Nach der Bewegung der Bodenreinigungsmaschine 3 entlang des ersten Arbeitspfads wird die Reinigungsvorrichtung in die Transportposition verbracht und die Bodenreinigungsmaschine 3 wird entlang des ersten Transportpfads 25, entlang des ersten Verbindungspfads 28 und zu dem zweiten Transportpfad 27 bewegt. Die Bodenreinigungsmaschine 3 wird entlang des zweiten Transportpfads 27 zu einem Ende des zweiten Transportpfads 27 oder auf einen Punkt auf dem Transportpfad 27 bewegt. Die Reinigungsvorrichtung ist zumindest in Abschnitten des ersten Transportpfads 25, des ersten Verbindungspfads 28 und des zweiten Transportpfads 27 in der Transportposition.

Anschließend wird die Reinigungsvorrichtung in die Arbeitsposition verbracht und die Bodenreinigungsmaschine 3 wird innerhalb des zweiten Arbeitsareals 23 entlang des zweiten Arbeitspfads bewegt. Die Reinigungsvorrichtung ist zumindest in Abschnitten des zweiten Arbeitspfades in der Arbeitsposition. Während des Bewegens der Bodenreinigungsmaschine 3 entlang des zweiten Arbeitspfads wird die Umgebung der Bodenreinigungsmaschine 3 so erfasst, dass, wenn ein Hindernis auf dem zweiten Arbeitspfad angeordnet ist, das Hindernis von der Bodenreinigungsmaschine erfasst wird. Wenn ein Hindernis auf dem zweiten Arbeitspfad angeordnet ist, wird der zweite Arbeitspfad zumindest abschnittsweise so geändert, dass die Bodenreinigungsmaschine nicht mit dem Hindernis kollidiert.

Bei dem in den Figuren 1 bis 4 dargestellten Beispiel, ist weder ein Hindernis auf dem ersten Arbeitspfad noch ein Hindernis auf dem zweiten Arbeitspfad angeordnet, sodass weder eine Änderung des ersten Arbeitspfads noch eine Änderung des zweiten Arbeitspfads notwendig ist.

Des Weiteren wird die Umgebung der Bodenreinigungsmaschine 3 während der Bewegung der Bodenreinigungsmaschine 3 entlang des geschlossenen ersten Lernpfades 5 und während der Bewegung der Bodenreinigungsmaschine 3 entlang des geschlossenen zweiten Lernpfades 15 erfasst. Eine Karte wird anhand der erfassten Umgebung der Bodenreinigungsmaschine 3 erstellt, sodass die erfasste Umgebung der Bodenreinigungsmaschine 3 in der Karte repräsentiert ist. In dem in den Figuren 1 bis 4 dargestellten Beispiel ist die erfasste Umgebung der Bodenreinigungsmaschine 3 die Wand des Gebäudes. Die Wand des Gebäudes ist in den Figuren 1 bis 4 als Begrenzungslinie 13 dargestellt. Das erste Arbeitsareal 21 und das zweite Arbeitsareal 23 werden zu der Karte hinzugefügt. Das erste Arbeitsareal 21 und das zweite Arbeitsareal 23 können in der Karte repräsentiert sein. Ebenso werden der erste Transportpfad 25 und der zweite Transportpfad 27 zu der Karte hinzugefügt und können in der Karte repräsentiert werden. Außerdem wird der erste Verbindungspfad 28 zu der Karte hinzugefügt und kann in der Karte repräsentiert werden. Auf ähnliche Weise kann auch der erste Arbeitspfad und/oder der zweite Arbeitspfad zu der Karte hinzugefügt werden, sodass der erste Arbeitspfad und/oder der zweite Arbeitspfad in der Karte repräsentiert ist. Die Karte, die die erfasste Umgebung der Bodenreinigungsmaschine repräsentiert, kann bei der Bestimmung des ersten Arbeitspfads, des zweiten Arbeitspfads, des ersten Transportpfads 25, des zweiten Transportpfads 27 und/oder des ersten Verbindungspfads 28 berücksichtigt werden, sodass durch eine vorteilhafte Form und Anordnung des ersten Arbeitspfads, des zweiten Arbeitspfads, des ersten Transportpfads 25, des zweiten Transportpfads 27 und/oder des ersten Verbindungspfads 28 eine effiziente Bewegung der Bodenreinigungsmaschine ermöglicht wird.

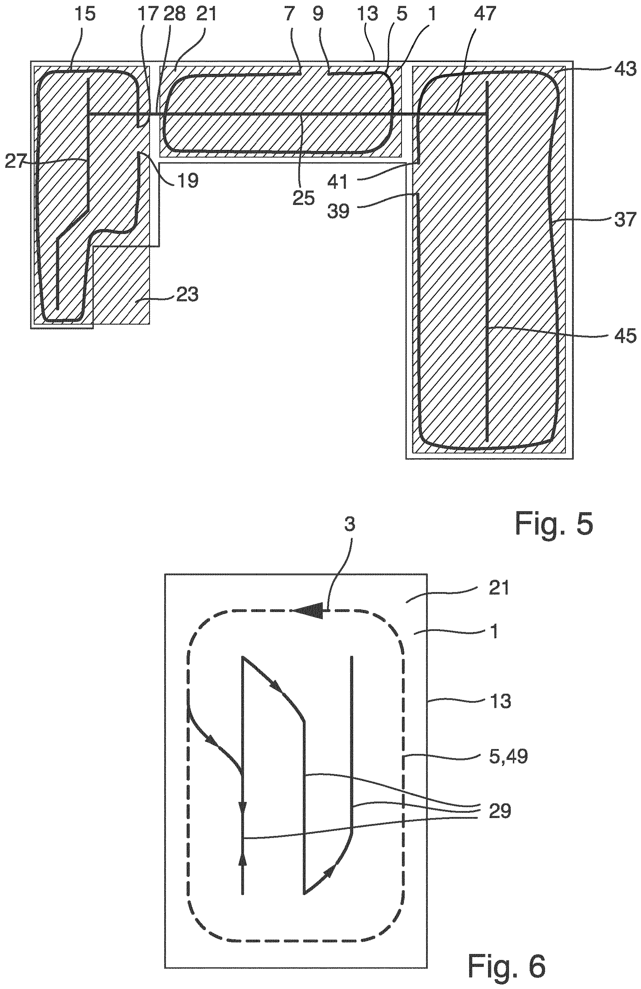

Figur 5 zeigt eine schematische Draufsicht einer zu reinigenden zweiten Bodenfläche 1, die im Wesentlichen der in den Figuren 1 bis 4 dargestellten ersten Bodenfläche 1 entspricht und durch einen in Figur 5 rechts dargestellten weiteren Bodenflächenbereich ergänzt ist.

Figur 5 zeigt den geschlossenen ersten Lernpfad 5, der sich von dem Anfang 7 des ersten Lernpfades 5 zu dem Ende 9 des ersten Lernpfades 5 erstreckt. Außerdem zeigt Figur 5 den geschlossenen zweiten Lernpfad 15, der sich von dem Anfang 17 des zweiten Lernpfads 15 zu dem Ende 19 des zweiten Lernpfads 15 erstreckt. Zusätzlich zeigt Figur 5 einen geschlossenen dritten Lernpfad 37, der sich von einem Anfang 39 des dritten Lernpfads 37 zu einem Ende 41 des dritten Lernpfads 37 erstreckt. Die zu reinigende zweite Bodenfläche 1 wird von einer Begrenzungslinie 13 begrenzt, die im vorliegenden Beispiel durch eine Wand eines Gebäudes definiert ist. Zusätzlich zu dem ersten Arbeitsareal 21 und dem zweiten Arbeitsareal 23 ist ein drittes Arbeitsareal 43 dargestellt. Außerdem sind der erste Transportpfad 25, der zweite Transportpfad 27 sowie ein dritter Transportpfad 45 dargestellt. Des Weiteren sind der erste Verbindungspfad 28 und ein zweiter Verbindungspfad 47 dargestellt. Der erste Verbindungspfad 28 verbindet den ersten Transportpfad 25 und den zweiten Transportpfad 27 miteinander und der zweite Verbindungspfad 47 verbindet den ersten Transportpfad 25 und den dritten Transportpfad 45 miteinander.

Die Bodenreinigungsmaschine 3 wird über die zu reinigende zweite Bodenfläche 1 entlang des geschlossenen ersten Lernpfades 5, entlang des geschlossenen zweiten Lernpfades 15 und entlang des geschlossenen dritten Lernpfades 37 bewegt. Das erste Arbeitsareal 21, das zweite Arbeitsareal 23 und das dritte Arbeitsareal 43 werden bestimmt. Das erste Arbeitsareal 21, das zweite Arbeitsareal 23 und das dritte Arbeitsareal 43 weisen jeweils einen Abschnitt der zu reinigenden zweiten Bodenfläche 1 auf. Das erste Arbeitsareal 21, das zweite Arbeitsareal 23 und das dritte Arbeitsareal 43 weisen jeweils eine vorgegebene geometrische Figur auf, die jeweils ein Viereck ist. Das erste Arbeitsareal 21, das zweite Arbeitsareal 23 und das dritte Arbeitsareal 43 werden jeweils so bestimmt, dass die Erstreckung des ersten Arbeitsareals 21 durch den geschlossenen ersten Lernpfad 5 bestimmt ist, die Erstreckung des zweiten Arbeitsareals 23 durch den geschlossenen zweiten Lernpfad 15 bestimmt ist und die Erstreckung des dritten Arbeitsareals 43 durch den geschlossenen dritten Lernpfad 37 bestimmt ist.

Der erste Transportpfad 25 wird in dem ersten Arbeitsareal 21, der zweite Transportpfad 27 wird in dem zweiten Arbeitsareal 23 und der dritte Transportpfad 45 wird in dem dritten Arbeitsareal 43 bestimmt. Der erste Transportpfad 25 ist innerhalb des ersten Lernpfades 5 angeordnet, der zweite Transportpfad 27 ist innerhalb des zweiten Lernpfades 15 angeordnet und der dritte Transportpfad 45 ist innerhalb des dritten Lernpfades 37 angeordnet. Wenn der erste Transportpfad 25 und der zweite Transportpfad 27 bestimmt sind, wird der erste Verbindungspfad 28 bestimmt. Außerdem wird der zweite Verbindungspfad 47 dann bestimmt, wenn der erste Transportpfad 25 und der dritte Transportpfad 45 bestimmt sind.

Des Weiteren wird der erste Arbeitspfad innerhalb des ersten Arbeitsareals 21, der zweite Arbeitspfad innerhalb des zweiten Arbeitsareals 23 und ein dritter Arbeitspfad innerhalb des dritten Arbeitsareals 43 bestimmt. Die Reinigungsvorrichtung 3 wird in die Arbeitsposition verbracht und die Bodenreinigungsmaschine 3 wird innerhalb des ersten Arbeitsareals 21 entlang des ersten Arbeitspfads bewegt. Die Reinigungsvorrichtung ist zumindest in Abschnitten des ersten Arbeitspfades in der Arbeitsposition. Während des Bewegens der Bodenreinigungsmaschine 3 entlang des ersten Arbeitspfads wird die Umgebung der Bodenreinigungsmaschine 3 so erfasst, dass, wenn ein Hindernis auf dem ersten Arbeitspfad angeordnet ist, das Hindernis von der Bodenreinigungsmaschine erfasst wird. Wenn ein Hindernis auf dem ersten Arbeitspfad angeordnet ist, wird der erste Arbeitspfad zumindest abschnittsweise so geändert, dass die Bodenreinigungsmaschine nicht mit dem Hindernis kollidiert.

Nach der Bewegung der Bodenreinigungsmaschine 3 entlang des ersten Arbeitspfads wird die Reinigungsvorrichtung in die Transportposition verbracht und die Bodenreinigungsmaschine 3 wird entlang des ersten Transportpfads 25, entlang des Verbindungspfads 28 und zu dem zweiten Transportpfad 27 bewegt. Die Bodenreinigungsmaschine 3 wird entlang des zweiten Transportpfads 27 zu einem Ende des zweiten Transportpfads 27 oder auf einen Punkt auf dem Transportpfad 27 bewegt. Die Reinigungsvorrichtung ist zumindest in Abschnitten des ersten Transportpfads 25, des ersten Verbindungspfads 28 und des zweiten Transportpfads 27 in der Transportposition.

Anschließend wird die Reinigungsvorrichtung in die Arbeitsposition verbracht und die Bodenreinigungsmaschine 3 wird innerhalb des zweiten Arbeitsareals 23 entlang des zweiten Arbeitspfads bewegt. Die Reinigungsvorrichtung ist zumindest in Abschnitten des zweiten Arbeitspfades in der Arbeitsposition. Während des Bewegens der Bodenreinigungsmaschine 3 entlang des zweiten Arbeitspfads wird die Umgebung der Bodenreinigungsmaschine 3 so erfasst, dass, wenn ein Hindernis auf dem zweiten Arbeitspfad angeordnet ist, das Hindernis von der Bodenreinigungsmaschine erfasst wird. Wenn ein Hindernis auf dem zweiten Arbeitspfad angeordnet ist, wird der zweite Arbeitspfad zumindest abschnittsweise so geändert, dass die Bodenreinigungsmaschine nicht mit dem Hindernis kollidiert.

Wenn die Bodenreinigungsmaschine 3 entlang des zweiten Arbeitspfads bewegt wurde, wird die Reinigungsvorrichtung in die Transportposition verbracht und die Bodenreinigungsmaschine 3 wird entlang des zweiten Transportpfads 27, entlang des ersten Verbindungspfads 28, entlang des ersten Transportpfads 25, entlang des zweiten Verbindungspfads 47 und zu dem dritten Transportpfad 45 bewegt. Die Bodenreinigungsmaschine 3 wird entlang des dritten Transportpfads 45 zu einem Ende des dritten Transportpfads 45 oder auf einen Punkt auf dem dritten Transportpfad 45 bewegt. Die Reinigungsvorrichtung ist zumindest in Abschnitten des zweiten Transportpfads 27, des ersten Verbindungspfads 28, des ersten Transportpfads 25, des zweiten Verbindungspfads 47 und des dritten Transportpfads 45 in der Transportposition.

Anschließend wird die Reinigungsvorrichtung in die Arbeitsposition verbracht und die Bodenreinigungsmaschine 3 wird innerhalb des dritten Arbeitsareals 43 entlang des dritten Arbeitspfads bewegt. Die Reinigungsvorrichtung ist zumindest in Abschnitten des dritten Arbeitspfades in der Arbeitsposition. Während des Bewegens der Bodenreinigungsmaschine 3 entlang des dritten Arbeitspfads wird die Umgebung der Bodenreinigungsmaschine 3 so erfasst, dass, wenn ein Hindernis auf dem dritten Arbeitspfad angeordnet ist, das Hindernis von der Bodenreinigungsmaschine erfasst wird. Wenn ein Hindernis auf dem dritten Arbeitspfad angeordnet ist, wird der dritte Arbeitspfad zumindest abschnittsweise so geändert, dass die Bodenreinigungsmaschine nicht mit dem Hindernis kollidiert.

Bei dem in den Figuren 1 bis 4 dargestellten Beispiel, ist kein Hindernis auf dem ersten Arbeitspfad, auf dem zweiten Arbeitspfad oder auf dem dritten Arbeitspfad angeordnet, sodass keine Änderung des ersten Arbeitspfads, keine Änderung des zweiten Arbeitspfads und keine Änderung des dritten Arbeitspfads notwendig ist.

Des Weiteren wird die Umgebung der Bodenreinigungsmaschine 3 während der Bewegung der Bodenreinigungsmaschine 3 entlang des geschlossenen ersten Lernpfades 5, während der Bewegung der Bodenreinigungsmaschine 3 entlang des geschlossenen zweiten Lernpfades 15 und während der Bewegung der Bodenreinigungsmaschine 3 entlang des geschlossenen dritten Lernpfades 37 erfasst. Eine Karte wird anhand der erfassten Umgebung der Bodenreinigungsmaschine 3 erstellt, sodass die erfasste Umgebung der Bodenreinigungsmaschine 3 in der Karte repräsentiert ist. In dem in Figur 5 dargestellten Beispiel ist die erfasste Umgebung der Bodenreinigungsmaschine 3 die Wand des Gebäudes. Die Wand des Gebäudes ist in Figur 5 als Begrenzungslinie 13 dargestellt. Das erste Arbeitsareal 21, das zweite Arbeitsareal 23 und das dritte Arbeitsareal 43 werden zu der Karte hinzugefügt. Das erste Arbeitsareal 21, das zweite Arbeitsareal 23 und das dritte Arbeitsareal 43 können in der Karte repräsentiert sein. Ebenso werden der erste Transportpfad 25, der zweite Transportpfad 27 und der dritte Transportpfad 45 zu der Karte hinzugefügt und können in der Karte repräsentiert werden. Außerdem wird der erste Verbindungspfad 28 und der zweite Verbindungspfad 47 zu der Karte hinzugefügt und können in der Karte repräsentiert werden. Auf ähnliche Weise kann auch der erste Arbeitspfad und/oder der zweite Arbeitspfad und/oder der dritte Arbeitspfad zu der Karte hinzugefügt werden, sodass der erste Arbeitspfad und/oder der zweite Arbeitspfad und/oder der dritte Arbeitspfad in der Karte repräsentiert ist. Die Karte, die die erfasste Umgebung der Bodenreinigungsmaschine repräsentiert, kann bei der Bestimmung des ersten Arbeitspfads, des zweiten Arbeitspfads, des dritten Arbeitspfads, des ersten Transportpfads 25, des zweiten Transportpfads 27, des dritten Transportpfads 45, des ersten Verbindungspfads 28 und/oder des zweiten Verbindungspfads 47 berücksichtigt werden, sodass durch eine vorteilhafte Form und Anordnung des ersten Arbeitspfads, des zweiten Arbeitspfads, des dritten Arbeitspfads, des ersten Transportpfads 25, des zweiten Transportpfads 27, des dritten Transportpfads 45, des ersten Verbindungspfads 28 und/oder des zweiten Verbindungspfads 47 eine effiziente Bewegung der Bodenreinigungsmaschine ermöglicht wird.

Figur 6 zeigt eine schematische Draufsicht einer zu reinigenden dritten Bodenfläche 1, die mit einer zweiten Ausführungsform des erfindungsgemäßen Verfahrens gereinigt werden kann. Die Bodenreinigungsmaschine 3 ist in Figur 6 als Pfeil symbolisiert dargestellt. Der geschlossene erste Lernpfad 5 ist dargestellt. Die zu reinigende dritte Bodenfläche 1 wird von der Begrenzungslinie 13 begrenzt, die im vorliegenden Beispiel durch eine Wand eines Gebäudes definiert ist. Drei Abschnitte 29 des ersten Arbeitspfades sind dargestellt.

Zunächst wird die Bodenreinigungsmaschine 3 über die zu reinigende dritte Bodenfläche 1 entlang des geschlossenen ersten Lernpfades 5 bewegt. Das erste Arbeitsareal 21 wird bestimmt. Das erste Arbeitsareal 21 bildet in dem gezeigten Beispiel die gesamte zu reinigende dritte Bodenfläche 1. Das erste Arbeitsareal 21 weist eine vorgegebene geometrische Figur auf, die ein Viereck ist. Das erste Arbeitsareal 21 wird so bestimmt, dass die Erstreckung des ersten Arbeitsareals 21 durch den geschlossenen ersten Lernpfad 5 bestimmt ist.

Außerdem wird ein erster Arbeitspfad mit drei Abschnitten 29 innerhalb des ersten Arbeitsareals 21 bestimmt. Die Reinigungsvorrichtung wird in die Arbeitsposition verbracht und die Bodenreinigungsmaschine 3 wird innerhalb des ersten Arbeitsareals 21 entlang des ersten Arbeitspfads bewegt. Die Reinigungsvorrichtung ist zumindest in Abschnitten des ersten Arbeitspfades in der Arbeitsposition. Während des Bewegens der Bodenreinigungsmaschine 3 entlang des ersten Arbeitspfads wird die Umgebung der Bodenreinigungsmaschine 3 so erfasst, dass, wenn ein Hindernis auf dem ersten Arbeitspfad angeordnet ist, das Hindernis von der Bodenreinigungsmaschine erfasst wird. Wenn ein Hindernis auf dem ersten Arbeitspfad angeordnet ist, wird der erste Arbeitspfad zumindest abschnittsweise so geändert, dass die Bodenreinigungsmaschine nicht mit dem Hindernis kollidiert. Bei dem in Figur 6 dargestellten Beispiel, ist kein Hindernis auf dem ersten Arbeitspfad angeordnet, sodass eine Änderung des ersten Arbeitspfads nicht notwendig ist.

In dem in Figur 6 gezeigten Beispiel weist der erste Arbeitspfad den gesamten geschlossenen ersten Lernpfad 5 auf, sodass sich ein Abschnitt 49 des ersten Arbeitspfads entlang des gesamten ersten Lernpfades 5 erstreckt. Der erste Lernpfad 5 und der erste Arbeitspfad sind grundsätzlich zwei sich unterscheidende Pfade. Jedoch ist in dem in Figur 6 dargestellten Beispiel vorgesehen, dass ein Abschnitt des ersten Arbeitspfads mit dem ersten Lernpfad 5 zusammenfällt. Nachdem die Bodenreinigungsmaschine 3 entlang des geschlossenen ersten Lernpfads 5 bewegt wurde, wird die Reinigungsvorrichtung in die Arbeitsposition verbracht und die Bodenreinigungsmaschine 3 entlang des ersten Arbeitspfads bewegt, indem die Bodenreinigungsmaschine 3 zunächst entlang des gesamten ersten Lernpfades 5 bewegt wird. Dadurch, dass die Bodenreinigungsmaschine 3 mit in die Arbeitsposition verbrachter Reinigungsvorrichtung entlang des ersten Arbeitspfads bewegt wird, indem die Bodenreinigungsmaschine 3 zunächst entlang des gesamten ersten Lernpfades 5 bewegt wird, wird gewährleistet, dass die dritte Bodenfläche 1 vollständig auch in Bereichen an den Enden der drei Abschnitte 29 des ersten Arbeitspfades gereinigt wird. Als nächstes wird die Bodenreinigungsmaschine 3 von dem ersten Lernpfad 5, der mit einem Abschnitt des ersten Arbeitspfads zusammenfällt und bereits abgefahren wurde, hin zu dem in Figur 6 links dargestellten Abschnitt 29 des ersten Arbeitspfads bewegt, wie durch den in Figur 6 links dargestellten geschwungenen Pfeil symbolisiert. Anschließend wird die Bodenreinigungsmaschine 3 entlang des in Figur 6 links dargestellten Abschnitt 29 zunächst nach unten bewegt, am unteren Ende des in Figur 6 links dargestellten Abschnitts 29 gedreht, bevorzugt mit einem Drehwinkel von in etwa 180°, und sodann entlang des in Figur 6 links dargestellten Abschnitts 29 nach oben bewegt. Am oberen Ende des in Figur 6 links dargestellten Abschnitts 29 wird die Bodenreinigungsmaschine 3 gedreht, bevorzugt mit einem Drehwinkel von in etwa 120°, und hin zu dem in Figur 6 mittig dargestellten Abschnitt 29 des ersten Arbeitspfads bewegt, wie durch den in Figur 6 mittig dargestellten geschwungenen Pfeil symbolisiert. Sodann wird die Bodenreinigungsmaschine entlang des in Figur 6 mittig dargestellten Abschnitts 29 von dem oberen Ende des in Figur 6 mittig dargestellten Abschnitts 29 hin zu dem unteren Ende des in Figur 6 mittig dargestellten Abschnitts 29 bewegt. Am unteren Ende des in Figur 6 mittig dargestellten Abschnitts 29 wird die Bodenreinigungsmaschine 3 gedreht, bevorzugt mit einem Drehwinkel von in etwa 120°, und hin zu dem in Figur 6 rechts dargestellten Abschnitt 29 des ersten Arbeitspfads bewegt, wie durch den in Figur 6 rechts dargestellten geschwungenen Pfeil symbolisiert. Als nächstes wird die Bodenreinigungsmaschine entlang des in Figur 6 rechts dargestellten Abschnitts 29 von dem unteren Ende des in Figur 6 rechts dargestellten Abschnitts 29 hin zu dem oberen Ende des in Figur 6 rechts dargestellten Abschnitts 29 bewegt.

Außerdem wird die Umgebung der Bodenreinigungsmaschine 3 während der Bewegung der Bodenreinigungsmaschine 3 entlang des geschlossenen ersten Lernpfades 5 erfasst. Eine Karte wird anhand der erfassten Umgebung der Bodenreinigungsmaschine 3 erstellt, sodass die erfasste Umgebung der Bodenreinigungsmaschine 3 in der Karte repräsentiert ist. In dem in der Figur 6 dargestellten Beispiel ist die erfasste Umgebung der Bodenreinigungsmaschine 3 die Wand des Gebäudes. Die Wand des Gebäudes ist in Figur 6 als Begrenzungslinie 13 dargestellt. Das erste Arbeitsareal 21 wird zu der Karte hinzugefügt. Das erste Arbeitsareal 21 kann in der Karte repräsentiert werden. Auf ähnliche Weise werden die Abschnitte 29 des ersten Arbeitspfads zu der Karte hinzugefügt, sodass die Abschnitte 29 des ersten Arbeitspfads in der Karte repräsentiert sind.

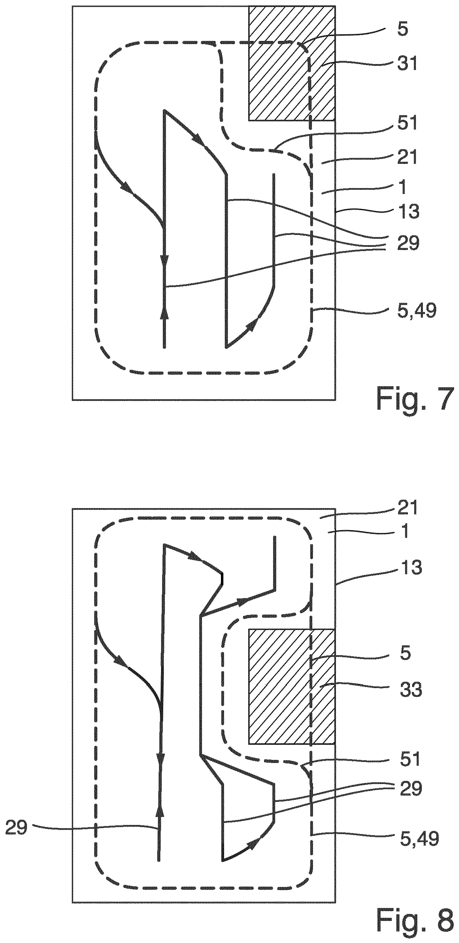

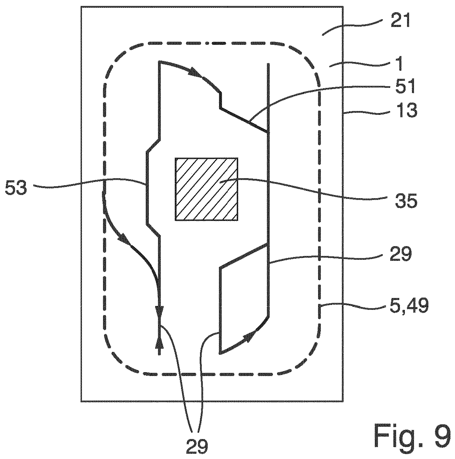

Figur 7 zeigt eine schematische Draufsicht der in Figur 6 dargestellten zu reinigenden dritten Bodenfläche 1, auf der ein erstes Hindernis 31 angeordnet ist, Figur 8 zeigt eine schematische Draufsicht der in Figur 6 dargestellten zu reinigenden dritten Bodenfläche 1, auf der ein zweites Hindernis 33 angeordnet ist und Figur 9 zeigt eine schematische Draufsicht der in Figur 6 dargestellten zu reinigenden dritten Bodenfläche 1, auf der ein drittes Hindernis 35 angeordnet ist.

Wie bereits im Zusammenhang mit Figur 6 beschrieben, wird die Bodenreinigungsmaschine 3 in jedem der in den Figuren 7, 8 und 9 dargestellten Beispielen über die zu reinigende dritte Bodenfläche 1 entlang des geschlossenen ersten Lernpfades 5 bewegt. Das erste Arbeitsareal 21 wird bestimmt. Das erste Arbeitsareal 21 bildet in dem gezeigten Beispiel die gesamte zu reinigende dritte Bodenfläche 1. Das erste Arbeitsareal 21 weist eine vorgegebene geometrische Figur auf, die ein Viereck ist. Das erste Arbeitsareal 21 wird so bestimmt, dass die Erstreckung des ersten Arbeitsareals 21 durch den geschlossenen ersten Lernpfad 5 bestimmt ist.

Des Weiteren wird jeweils ein erster Arbeitspfad mit drei Abschnitten 29 innerhalb des ersten Arbeitsareals 21 bestimmt, wobei der zunächst bestimmte erste Arbeitspfad mit dem im Zusammenhang mit Figur 6 bestimmten ersten Arbeitspfad übereinstimmt. Die Reinigungsvorrichtung wird in die Arbeitsposition verbracht und die Bodenreinigungsmaschine 3 wird innerhalb des ersten Arbeitsareals 21 entlang des ersten Arbeitspfads bewegt. Die Reinigungsvorrichtung ist zumindest in Abschnitten des ersten Arbeitspfades in der Arbeitsposition. Während des Bewegens der Bodenreinigungsmaschine 3 entlang des ersten Arbeitspfads wird die Umgebung der Bodenreinigungsmaschine 3 so erfasst, dass das auf dem ersten Arbeitspfad angeordnete Hindernis 31, 33, 35 von der Bodenreinigungsmaschine erfasst wird. Da jeweils das entsprechende Hindernis 31, 33, 35 von der Bodenreinigungsmaschine erfasst wird, wird der erste Arbeitspfad zumindest abschnittsweise so geändert, dass die Bodenreinigungsmaschine nicht mit dem Hindernis kollidiert. In den in den Figuren 7, 8 und 9 dargestellten Beispielen wird ein weiterer Abschnitt 51 des ersten Arbeitspfads so geändert, dass der weitere Abschnitt 51 die Bodenreinigungsmaschine um das entsprechende Hindernis 31, 33, 35 herumführt. In dem in Figur 9 dargestellten Beispiel wird außerdem ein dritter Abschnitt 53 des ersten Arbeitspfads so geändert, dass der dritte Abschnitt 53 die Bodenreinigungsmaschine um das dritte Hindernis 35 herumführt.

Da der erste Arbeitspfad jeweils zumindest abschnittsweise geändert wird, , kann eine Kollision zwischen der Bodenreinigungsmaschine 3 und dem Hindernis 31, 33, 35 während der Bewegung der Bodenreinigungsmaschine 3 entlang des ersten Arbeitspfads vermieden werden. Je nach Anordnung und Erstreckung des ersten Hindernisses 31, des zweiten Hindernisses 33 bzw. des dritten Hindernisses 35 können die Abschnitte 29 des ersten Arbeitspfades entsprechend ausgebildet und angeordnet sein, sodass der erste Arbeitspfad in dem ersten Arbeitsareal 21 angeordnet ist.

In den in den Figuren 7 und 8 gezeigten Beispielen weist der erste Arbeitspfad lediglich einen Abschnitt des geschlossenen ersten Lernpfads 5 auf, sodass sich ein Abschnitt 49 des ersten Arbeitspfads entlang des Abschnitts des ersten Lernpfades 5 erstreckt. In dem in Figur 9 gezeigten Beispiel wiederum weist der erste Arbeitspfad den gesamten geschlossenen ersten Lernpfad 5 auf, sodass sich ein Abschnitt des ersten Arbeitspfads entlang des gesamten ersten Lernpfades 5 erstreckt. Nachdem die Bodenreinigungsmaschine 3 entlang des geschlossenen ersten Lernpfads 5 bewegt wurde, wird die Reinigungsvorrichtung in die Arbeitsposition verbracht und die Bodenreinigungsmaschine 3 entlang des ersten Arbeitspfads bewegt, indem die Bodenreinigungsmaschine 3 zunächst entlang des gesamten ersten Lernpfades 5 bewegt wird, der mit einem Abschnitt des ersten Arbeitspfads zusammenfällt. Dadurch, dass die Bodenreinigungsmaschine 3 mit in die Arbeitsposition verbrachter Reinigungsvorrichtung entlang des ersten Arbeitspfades bewegt wird, indem die Bodenreinigungsmaschine 3 zunächst entlang des gesamten ersten Lernpfades 5 bewegt wird, wird gewährleistet, dass die dritte Bodenfläche 1 vollständig auch in Bereichen an den Enden der drei Abschnitte 29 des ersten Arbeitspfades gereinigt wird.

Nachdem die Bodenreinigungsmaschine 3 mit in die Arbeitsposition verbrachter Reinigungsvorrichtung entlang des ersten Lernpfades 5 bewegt wurde, wird die Bodenreinigungsmaschine 3 von dem ersten Lernpfad 5 hin zu dem entsprechenden in den Figuren 7, 8 und 9 jeweils links dargestellten Abschnitt 29 des ersten Arbeitspfads bewegt, wie durch den entsprechenden in den Figuren 7, 8 und 9 jeweils links dargestellten geschwungenen Pfeil symbolisiert. Anschließend wird die Bodenreinigungsmaschine 3 entlang des entsprechenden in den Figuren 7, 8 und 9 jeweils links dargestellten Abschnitts 29 zunächst nach unten bewegt, am jeweiligen unteren Ende des entsprechenden in den Figuren 7, 8 und 9 links dargestellten Abschnitts 29 gedreht, bevorzugt mit einem Drehwinkel von in etwa 180°, und sodann entlang des entsprechenden in den Figuren 7, 8 und 9 jeweils links dargestellten Abschnitts 29 nach oben bewegt. Am jeweiligen oberen Ende des entsprechenden in den Figuren 7, 8 und 9 links dargestellten Abschnitts 29 wird die Bodenreinigungsmaschine 3 gedreht, bevorzugt mit einem Drehwinkel von in etwa 120°, und hin zu dem in den Figuren 7, 8 und 9 jeweils mittig dargestellten Abschnitt 29 des jeweiligen ersten Arbeitspfads bewegt, wie durch den entsprechenden in den Figuren 7, 8 und 9 jeweils mittig dargestellten geschwungenen Pfeil symbolisiert. Sodann wird die Bodenreinigungsmaschine entlang des entsprechenden in den Figuren 7, 8 und 9 jeweils mittig dargestellten Abschnitts 29 von dem oberen Ende des entsprechenden in den Figuren 7, 8 und 9 jeweils mittig dargestellten Abschnitts 29 hin zu dem unteren Ende des entsprechenden in den Figuren 7, 8 und 9 jeweils mittig dargestellten Abschnitt 29 bewegt. Am unteren Ende des in den Figuren 7, 8 und 9 jeweils mittig dargestellten Abschnitts 29 wird die Bodenreinigungsmaschine 3 gedreht, bevorzugt mit einem Drehwinkel von in etwa 120°, und hin zu dem in den Figuren 7, 8 und 9 jeweils rechts dargestellten Abschnitt 29 des ersten Arbeitspfads bewegt, wie durch den in den Figuren 7, 8 und 9 jeweils rechts dargestellten geschwungenen Pfeil symbolisiert. Als nächstes wird die Bodenreinigungsmaschine 3 entlang des in den Figuren 7, 8 und 9 jeweils rechts dargestellten Abschnitts 29 von dem unteren Ende des in den Figuren 7, 8 und 9 jeweils rechts dargestellten Abschnitts 29 hin zu dem oberen Ende des in den Figuren 7, 8 und 9 jeweils rechts dargestellten Abschnitts 29 bewegt.

Wenn die Bodenreinigungsmaschine 3 entlang des geschlossenen ersten Lernpfades 5 bewegt wird, wird die Umgebung der Bodenreinigungsmaschine 3 erfasst. Hierbei wird auch das erste Hindernis 31, das zweite Hindernis 33 bzw. das dritte Hindernis 35 erfasst. Anhand der erfassten Umgebung wird nun eine die erfasste Umgebung der Bodenreinigungsmaschine 3 repräsentierende Karte erstellt. Die erfasste Umgebung der Bodenreinigungsmaschine 3 ist die Wand des Gebäudes sowie das erste Hindernis 31, das zweite Hindernis 33 bzw. das dritte Hindernis 35.

## Patentansprüche

1. Verfahren zum Reinigen einer Bodenfläche (1) mit einer Bodenreinigungsmaschine (3) mit einem Fahrwerk zum Bewegen der Bodenreinigungsmaschine (3) über die zu reinigende Bodenfläche (1) und mit einer an dem Fahrwerk befestigten Reinigungsvorrichtung, die in eine Arbeitsposition verbracht werden kann, in der die Reinigungsvorrichtung mit der zu reinigenden Bodenfläche (1) eingreift, wobei das Verfahren folgende Schritte umfasst:
Bewegen der Bodenreinigungsmaschine (3) über die zu reinigende Bodenfläche (1) entlang eines geschlossenen ersten Lernpfades (5),
Bestimmen eines zumindest einen Abschnitt der zu reinigenden Bodenfläche (1) aufweisenden ersten Arbeitsareals (21) mit einer vorgegebenen geometrischen Figur, wobei die Erstreckung des ersten Arbeitsareals (21) durch den geschlossenen ersten Lernpfad (5) bestimmt ist,
Bestimmen eines ersten Arbeitspfads innerhalb des ersten Arbeitsareals (21),
Bewegen der Bodenreinigungsmaschine (3) entlang des ersten Arbeitspfads, wobei die Reinigungsvorrichtung zumindest in Abschnitten des ersten Arbeitspfades in der Arbeitsposition ist,
Erfassen der Umgebung der Bodenreinigungsmaschine (3) während des Bewegens der Bodenreinigungsmaschine (3) entlang des ersten Arbeitspfads so, dass, wenn ein Hindernis auf dem ersten Arbeitspfad angeordnet ist, das Hindernis von der Bodenreinigungsmaschine erfasst wird, und
wenn ein Hindernis auf dem ersten Arbeitspfad angeordnet ist, Ändern des ersten Arbeitspfads zumindest abschnittsweise so, dass die Bodenreinigungsmaschine nicht mit dem Hindernis kollidiert, wobei das Verfahren außerdem folgenden Schritt umfasst:
Bestimmen eines ersten Transportpfads (25) in dem ersten Arbeitsareal (21),
Verbringen der Reinigungsvorrichtung in eine Transportposition, und
Bewegen der Bodenreinigungsmaschine (3) entlang des ersten Transportpfads (25), wobei die Reinigungsvorrichtung zumindest in Abschnitten des ersten Transportpfads (25) in der Transportposition ist, wobei das Verfahren außerdem folgende Schritte umfasst:
Bewegen der Bodenreinigungsmaschine (3) über die zu reinigende Bodenfläche (1) entlang eines geschlossenen zweiten Lernpfades (15),
Bestimmen eines zumindest einen Abschnitt der zu reinigenden Bodenfläche (1) aufweisenden zweiten Arbeitsareals (23) mit einer vorgegebenen geometrischen Figur, wobei die Erstreckung des zweiten Arbeitsareals (23) durch den geschlossenen zweiten Lernpfad (15) bestimmt ist,
Bestimmen eines zweiten Arbeitspfads innerhalb des zweiten Arbeitsareals (23),
Bewegen der Bodenreinigungsmaschine (3) entlang des zweiten Arbeitspfads, wobei die Reinigungsvorrichtung zumindest in Abschnitten des zweiten Arbeitspfades in der Arbeitsposition ist,
Erfassen der Umgebung der Bodenreinigungsmaschine (3) während des Bewegens der Bodenreinigungsmaschine (3) entlang des zweiten Arbeitspfads so, dass, wenn ein Hindernis auf dem zweiten Arbeitspfad angeordnet ist, das Hindernis von der Bodenreinigungsmaschine erfasst wird, und
wenn ein Hindernis auf dem zweiten Arbeitspfad angeordnet ist, Ändern des zweiten Arbeitspfads zumindest abschnittsweise so, dass die Bodenreinigungsmaschine nicht mit dem Hindernis kollidiert, wobei das Verfahren außerdem folgenden Schritt umfasst:
Bestimmen eines zweiten Transportpfads (27) in dem zweiten Arbeitsareal (23),
Verbringen der Reinigungsvorrichtung in eine Transportposition, und
Bewegen der Bodenreinigungsmaschine (3) entlang des zweiten Transportpfads (27), wobei die Reinigungsvorrichtung zumindest in Abschnitten des zweiten Transportpfads (25) in der Transportposition ist, wobei das Verfahren außerdem folgenden Schritt umfasst:
Bestimmen eines ersten Verbindungspfads (28), der den ersten Transportpfad (25) und den zweiten Transportpfad (27) miteinander verbindet,
Verbringen der Reinigungsvorrichtung in eine Transportposition, und
Bewegen der Bodenreinigungsmaschine (3) entlang des Verbindungspfads (28), wobei die Reinigungsvorrichtung zumindest in Abschnitten des Verbindungspfads (28) in der Transportposition ist.

2. Verfahren nach einem der vorhergehenden Ansprüche, wobei das Verfahren außerdem folgende Schritte umfasst:
Erfassen der Umgebung der Bodenreinigungsmaschine (3) während der Bewegung der Bodenreinigungsmaschine (3) entlang des geschlossenen ersten Lernpfades (5) und/oder Erfassen der Umgebung der Bodenreinigungsmaschine (3) während der Bewegung der Bodenreinigungsmaschine (3) entlang des geschlossenen zweiten Lernpfades (15), und
Erstellen einer die erfasste Umgebung der Bodenreinigungsmaschine (3) repräsentierende Karte anhand der erfassten Umgebung der Bodenreinigungsmaschine (3).

3. Verfahren nach Anspruch 2, wobei das Verfahren außerdem folgenden Schritt umfasst:
Hinzufügen des ersten Arbeitsareals (21) und/oder des zweiten Arbeitsareals (23) zu der Karte, sodass das erste Arbeitsareal (21) und/oder das zweite Arbeitsareal (23) in der Karte repräsentiert ist.

4. Verfahren nach einem der Ansprüche 2 und 3, wobei das Verfahren außerdem folgenden Schritt umfasst:
Hinzufügen des ersten Arbeitspfads und/oder des zweiten Arbeitspfads zu der Karte, sodass der erste Arbeitspfad und/oder der zweite Arbeitspfad in der Karte repräsentiert ist.

5. Verfahren nach einem der Ansprüche 2 bis 4, wobei das Verfahren außerdem folgenden Schritt umfasst:
Hinzufügen des ersten Transportpfads (25) und/oder des zweiten Transportpfads (27) zu der Karte, sodass der erste Transportpfad (25) und/oder der zweite Transportpfad (27) in der Karte repräsentiert ist.

6. Verfahren nach einem der Ansprüche 2 bis 5, wobei das Verfahren außerdem folgenden Schritt umfasst:
Hinzufügen des ersten Verbindungspfads (28) zu der Karte, sodass der Verbindungspfad (28) in der Karte repräsentiert ist.

## Claims

1. A method for cleaning a floor surface (1) with a floor cleaning machine (3) having a chassis for moving the floor cleaning machine (3) over the floor surface (1) to be cleaned and having a cleaning device attached to the chassis, which cleaning device can be brought into a working position in which the cleaning device engages with the floor surface (1) to be cleaned, wherein the method comprises the following steps:
moving the floor cleaning machine (3) over the floor surface (1) to be cleaned along a closed first learning path (5),
determining a first working area (21) with a predetermined geometric figure having at least a portion of the floor surface (1) to be cleaned, wherein the extent of the first working area (21) is determined by the closed first learning path (5),
determining a first working path within the first working area (21),
moving the floor cleaning machine (3) along the first working path, wherein the cleaning device is in the working position at least in sections of the first working path,
detecting the surroundings of the floor cleaning machine (3) during the moving of the floor cleaning machine (3) along the first working path such that, if an obstacle is located on the first working path, the obstacle is detected by the floor cleaning machine, and
if an obstacle is located on the first working path, changing the first working path at least in sections such that the floor cleaning machine does not collide with the obstacle, wherein the method further comprises the following step:
determining a first transport path (25) in the first working area (21),
bringing the cleaning device into a transport position, and
moving the floor cleaning machine (3) along the first transport path (25), wherein the cleaning device is in the transport position at least in sections of the first transport path (25), wherein the method also comprises the following steps:
moving the floor cleaning machine (3) over the floor surface (1) to be cleaned along a closed second learning path (15),
determining a second working area (23) with a predetermined geometric figure having at least a portion of the floor surface (1) to be cleaned, wherein the extent of the second working area (23) is determined by the closed second learning path (15),
determining a second working path within the second working area (23),
moving the floor cleaning machine (3) along the second working path, wherein the cleaning device is in the working position at least in sections of the second working path,
detecting the surroundings of the floor cleaning machine (3) during the moving of the floor cleaning machine (3) along the second working path such that, if an obstacle is located on the second working path, the obstacle is detected by the floor cleaning machine, and
if an obstacle is located on the second working path, changing the second working path at least in sections such that the floor cleaning machine does not collide with the obstacle, wherein the method further comprises the following step:
determining a second transport path (27) in the second working area (23),
bringing the cleaning device into a transport position, and
moving the floor cleaning machine (3) along the second transport path (27), wherein the cleaning device is in the transport position at least in sections of the second transport path (25), wherein the method also comprises the following step:
determining a first connection path (28) which connects the first transport path (25) and the second transport path (27) to one another,
bringing the cleaning device into a transport position, and
moving the floor cleaning machine (3) along the connection path (28), wherein the cleaning device is in the transport position at least in sections of the second connection path (28).

2. The method according to any one of the preceding claims, wherein the method further comprises the following steps:
detecting the surroundings of the floor cleaning machine (3) during the moving of the floor cleaning machine (3) along the closed first learning path (5) and/or detecting of the surroundings of the floor cleaning machine (3) during the moving of the floor cleaning machine (3) along the closed second learning path (15), and
creating a map representing the detected surroundings of the floor cleaning machine (3) based on the detected surroundings of the floor cleaning machine (3).

3. The method of claim 2, wherein the method further comprises the following step:
adding the first working area (21) and/or the second working area (23) to the map such that the first working area (21) and/or the second working area (23) is represented in the map.

4. The method according to one of claims 2 and 3, wherein the method further comprises the following step:
adding the first working path and/or the second working path to the map such that the first working path and/or the second working path is represented in the map.

5. The method according to one of claims 2 to 4, wherein the method further comprises the following step:
adding the first transport paths (25) and/or the second transport path (27) to the map such that the first transport path (25) and/or the second transport path (27) is represented in the map.

6. The method according to one of claims 2 to 5, wherein the method further comprises the following step:
adding the first connection path (28) to the map such that the connection path (28) is represented in the map.

## Revendications

1. Procédé de nettoyage d'une surface de plancher (1) avec une machine de nettoyage de plancher (3) avec un châssis pour déplacer la machine de nettoyage de plancher (3) sur la surface de plancher à nettoyer (1) et avec un dispositif de nettoyage fixé au châssis, qui peut être amené dans une position de travail dans laquelle le dispositif de nettoyage s'engage avec la surface de plancher à nettoyer (1), le procédé comprenant les étapes suivantes :
Déplacement de la machine de nettoyage de plancher (3) sur la surface du plancher à nettoyer (1) le long d'un premier chemin d'apprentissage fermé (5),
Détermination d'une première zone de travail (21) ayant au moins une partie de la surface de plancher à nettoyer (1) avec une figure géométrique prédéterminée, l'étendue de la première zone de travail (21) étant déterminée par le premier chemin d'apprentissage fermé (5) ,
Détermination d'un premier chemin de travail à l'intérieur de la première zone de travail (21),
Déplacement de la machine de nettoyage de plancher (3) le long du premier chemin de travail, le dispositif de nettoyage étant en position de travail au moins ponctuellement sur le premier chemin de travail,
Détection de l'environnement de la machine de nettoyage de plancher (3) pendant le déplacement de la machine de nettoyage de plancher (3) le long du premier chemin de travail de telle sorte que lorsqu'un obstacle est disposé sur le premier chemin de travail, l'obstacle soit détecté par la machine de nettoyage de plancher, et
si un obstacle est disposé sur le premier chemin de travail, modification du premier chemin de travail au moins par sections afin que la machine de nettoyage de plancher n'entre pas en collision avec l'obstacle, le procédé comprenant également l'étape suivante :
Détermination d'un premier chemin de transport (25) dans la première zone de travail (21),
Mise du dispositif de nettoyage en position de transport, et
Déplacement de la machine de nettoyage de plancher (3) le long du premier chemin de transport (25), le dispositif de nettoyage étant en position de transport au moins ponctuellement sur le premier chemin de transport (25), le procédé comprenant également les étapes suivantes :
Déplacement de la machine de nettoyage de plancher (3) sur la surface du plancher à nettoyer (1) le long d'un deuxième chemin d'apprentissage fermé (15),
Détermination d'une deuxième zone de travail (23) ayant au moins une partie de la surface de plancher à nettoyer (1) avec une figure géométrique prédéterminée, l'étendue de la deuxième zone de travail (23) étant déterminée par le deuxième chemin d'apprentissage fermé (15) ,
Détermination d'un deuxième chemin de travail à l'intérieur de la deuxième zone de travail (23),
Déplacement de la machine de nettoyage de plancher (3) le long du deuxième chemin de travail, le dispositif de nettoyage étant en position de travail au moins ponctuellement sur le deuxième chemin de travail,
Détection de l'environnement de la machine de nettoyage de plancher (3) pendant le déplacement de la machine de nettoyage de plancher (3) le long du deuxième chemin de travail de telle sorte que lorsqu'un obstacle est disposé sur le deuxième chemin de travail, l'obstacle soit détecté par la machine de nettoyage de plancher, et
si un obstacle est disposé sur le deuxième chemin de travail, modification du deuxième chemin de travail au moins par sections afin que la machine de nettoyage de plancher n'entre pas en collision avec l'obstacle, le procédé comprenant également l'étape suivante :
Détermination d'un deuxième chemin de transport (27) dans la deuxième zone de travail (23),
Mise du dispositif de nettoyage en position de transport, et
Déplacement de la machine de nettoyage de plancher (3) le long du deuxième chemin de transport (25), le dispositif de nettoyage étant en position de transport au moins ponctuellement sur le deuxième chemin de transport (25), le procédé comprenant également l'étape suivante :
Détermination d'un premier chemin de liaison (28) qui relie le premier chemin de transport (25) et le deuxième chemin de transport (27) l'un à l'autre,
Mise du dispositif de nettoyage en position de transport, et
Déplacement de la machine de nettoyage de plancher (3) le long du chemin de liaison (28), le dispositif de nettoyage étant en position de transport au moins ponctuellement sur le chemin de liaison (28),

2. Procédé selon l'une des revendications précédentes, dans lequel le procédé comprend en outre les étapes suivantes :
Détection de l'environnement de la machine de nettoyage de plancher (3) pendant le déplacement de la machine de nettoyage de plancher (3) le long du premier chemin d'apprentissage fermé (5) et/ou détection de l'environnement de la machine de nettoyage de plancher (3) pendant le déplacement de la machine de nettoyage de plancher (3) le long du deuxième chemin d'apprentissage fermé (15), et
Création d'une carte représentant l'environnement capturé de la machine de nettoyage de plancher (3) d'après l'environnement capturé de la machine de nettoyage de plancher (3).

3. Procédé selon la revendication 2, dans lequel le procédé comprend en outre l'étape suivante :
Ajout de la première zone de travail (21) et/ou de la seconde zone de travail (23) à la carte de sorte que la première zone de travail (21) et/ou la seconde zone de travail (23) soient représentées sur la carte.

4. Procédé selon l'une quelconque des revendications 2 et 3, dans lequel le procédé comprend en outre l'étape suivante :
Ajout du premier chemin de travail et/ou du deuxième chemin de travail à la carte de sorte que le premier chemin de travail et/ou le deuxième chemin de travail soient représentés sur la carte.

5. Procédé selon l'une quelconque des revendications 2 à 4, dans lequel le procédé comprend en outre l'étape suivante :
Ajout du premier chemin de transport (25) et/ou du deuxième chemin de transport (27) à la carte de sorte que le premier chemin de transport (25) et/ou le deuxième chemin de transport (27) soient représentés sur la carte.

6. Procédé selon l'une quelconque des revendications 2 à 5, dans lequel le procédé comprend en outre l'étape suivante :
Ajout du premier chemin de liaison (28) à la carte afin que le chemin de liaison (28) soit représenté sur la carte.
